# EUROPEAN PATENT SPECIFICATION

(11) **EP 1 905 678 B1**
(45) Date of publication and mention of the grant of the patent: **17.11.2010**
(21) Application number: 07113112.2
(22) Date of filing: 25.07.2007
(51) Int. Cl.: B62J 6/02

(54) **Support structure for lamp body unit**
Stützstruktur für eine Leuchtkörpereinheit
Structure de support pour unité de base de lampe

(30) Priority: 29.09.2006 JP 2006268759; 29.09.2006 JP 2006268760
(43) Date of publication of application: 02.04.2008
(73) Proprietor: HONDA MOTOR CO., LTD., Tokyo 107-8556 (JP)
(72) Inventor: Maruyama, Tomoyuki c/o Honda R&D Co., Ltd., Saitama 351-0193 (JP); Nakatake, Junichi c/o Honda R&D Co., Ltd., Saitama 351-0193 (JP)
(74) Representative: Rupp, Christian

(56) References cited:
- DE-A1- 10 012 896
- DE-A1- 10 041 591

## Description

The present invention relates to a support structure for a lamp body unit provided for a vehicle such as a motorcycle. The lamp body unit refers here to a unit integrally joining together a plurality of individual lamp bodies having independent housings separable from each other. The individual lamp body refers to a lamp body including a single housing. However, the individual lamp body may be of a unit structure in which a plurality of lamp bodies are integrally joined together in a housing as long as the housing is shared by the lamp bodies.

A support structure for a lamp body is known which is configured as below. A right headlight unit and a left head light unit are prepared left and right independently of each other. These head light units are integrally joined to each other to provide a headlight unit, which is secured to face a headlight-purpose opening of a front cover. In addition, attachment projections are provided on the left and right headlight units and attached to a body frame through corresponding elastic members. Thus, the left and right headlight units are individually and elastically secured by the body frame.

### [Patent Document 1]

Japanese Patent Laid-Open No. 2003-205878

If the entire headlights include a common housing, the headlights themselves are elastically secured by a body frame and fixedly secured by a body cover in a rigid manner. Thus, it is possible to absorb misalignment among the three members, i.e., the headlights, the body frame and the body cover. On the other hand, in the example in the past mentioned above, the headlight unit integrally joins together the individual lamp bodies having the respective housings independent of each other on the left and right sides. In this case, if the headlight unit is fixed to the body cover in a rigid manner and each of the housings is elastically secured by the body frame, the relative positions of the individual lamp bodies may be likely to be offset from each other depending on the attachment state of the headlight unit to the body cover. This requires high molding accuracy, machining accuracy and assembling accuracy of component parts, which leads to a problem of increased cost and assembly man-hours. There is a need for the present invention to solve the above problem.

Moreover, the following maintenance structure for a lamp body provided for a vehicle such as a motorcycle is known in the art. A front cover is provided with a headlight attachment hole from which a headlight is exposed and with a maintenance opening used to replace a headlight bulb, above the headlight. The maintenance opening is detachably covered by a maintenance cover.

### [Patent Document 2]

Japanese Patent No. 3594700

The structure in the past described above is provided with the maintenance opening having such a relatively large size as to be able to receive therein a man's hand inserted therethrough, at a portion of the front cover on the front surface of a vehicle. This portion is streamlined to project forward and is restrictive. Thus, the shapes of the front cover and maintenance cover might be likely to undergo restriction. The two-light type headlight or the like may be employed in which a plurality of bulbs of the headlight are provided and headlight units are divided left and right. In particular, this case needs to dispose a plurality of maintenance openings at respective positions corresponding to the bulbs of the headlights. Thus, it is difficult to provide a plurality of maintenance openings so as to ensure flexibility of designing a vehicle as well as enhance maintenance performance.

Patent document DE 100 12 896 A1 discloses accordingly to the preamble a lamp body unit (fig. 5) constitued by 2 individual lamp bodies, said lamp body unit is fastened to a front body cover.

Accordingly, the present invention has been made in view of the foregoing, and an object of the present invention is to easily position a lamp body unit in a vehicle in order to address the above-mentioned problem.

To solve the above problem, the invention of claim 1 pertaining to vehicle having a support structure for a lamp body unit is characterized in that in a support structure for a lamp body unit which unites a front body cover covering at least the front portion of a vehicle and a plurality of individual lamp bodies and which is supported by a vehicle body so as to be exposed from the body cover, the plurality of individual lamp bodies includes respective independent housings, which are integrally joined together to constitute the lamp body unit, and the lamp body unit is secured to the vehicle body at a joint portion of the housings.

The invention of claim 2 is characterized in that in claim 1 described above the plurality of individual lamp bodies are joined together with a fastening member with respective end portions of the housings superposed and are secured to the vehicle body with the fastening member.

The invention of claim 3 is characterized in that in claim 2 described above the lamp body unit is composed of a pair of individual lamp bodies disposed left and right, the left and right individual lamp bodies are provided with respective retaining portions used to mount the left and right individual lamp bodies to the vehicle body, and the lamp body unit is secured to a body frame with the fastening member at an almost-center of and below the retaining portions.

The invention of claim 4 is characterized in that in any one of claims 1 to 3 described above, the lamp body unit is formed to elongate upward and downward and a lower end edge portion of the lamp body unit is also used as a lower edge portion facing an air guide port which opens in a front surface of the body cover.

The invention of claim 5 is characterized in that in any one of claims 1 to 4 described above the body cover is a front cover which covers the front portion of the vehicle body and the front cover has an upper end which is secured to the lamp body unit and supported by the vehicle body and a lower end which is supported by the body frame.

The invention of claim 6 is characterized in that in any one of claims 1 to 5 described above the vehicle further comprises a maintenance structure for a lamp body including the front body cover which covers the front of the vehicle, a headlight provided on the front of the vehicle to include a plurality of bulbs, and a seat supported on the vehicle rearward of the headlight, the front body cover including a front cover which covers at least a front surface of the vehicle and a leg shield which covers a rear surface of the front cover and is located forward of the legs of an occupant sitting on the seat, the leg shield is provided with a plurality of openings rearward of the headlight so as to correspond to respective positions of the plurality of bulbs attached thereto, and a cover member covering the openings is detachably attached to the leg shield.

The invention of claim 7 is characterized in that in claim 6 described above the headlight is headlights separately left and right spaced apart from each other in a vehicle-width direction.

The invention of claim 8 is characterized in that in claim 6 or 7 described above the headlight is a headlight unit in which another lamp body is made integral with the lamp body in an up-down direction and the opening is also used as an opening for maintaining the another lamp body.

The invention of claim 9 is characterized in that in any one of claims 6 to 8 described above a key cylinder is exposed from the leg shield and at least one of the plurality of openings are disposed near the key cylinder.

The invention of claim 10 is characterized in that in any one of claims 6 to 9 described above, the leg shield is provided with an article storage portion and at least one of the plurality of openings is disposed between the article storage portion and a non-opening portion at the central portion in a vehicle-width direction.

According to the invention of claim 1, the lamp body unit is secured to the vehicle body at the joint portion of the individual lamp body. The individual lamp bodies can be joined to each other and simultaneously secured to the vehicle body through this joint. The relative positional relationship between the individual lamp bodies hardly become out of alignment as compared with that of the headlights separately secured to the vehicle body in the past. The positioning can be facilitated without being affected by the front cover. Thus, it is possible to position the lamp body unit without the necessities of high molding accuracy and assembling accuracy.

According to the invention of claim 2, since the fastening member to fasten the individual lamp bodies with each other is used to secure the individual lamp bodies to the lamp body, the accuracy of attaching the lamp body to the body frame can be ensured and the number of parts can be reduced because of co-fastening.

According to the invention of claim 3, since the lamp body unit is supported by the pair of left and light retaining portions and the central fastening member at the apexes of the almost-inverted triangle, it can be firmly supported.

According to the invention of claim 4, since the lower end edge portion of the lamp body unit is also used as the lower edge portion of the body cover facing the air guide port, positioning between the lamp body unit and the body cover is eliminated at the lower edge portion of the body cover. Thus, the attachment state is understandable and assembling is facilitated.

According to the invention of claim 5, the upper portion of the front cover is secured to the body frame via the lamp body unit; therefore, the front cover can firmly be supported by the vehicle body while reducing the number of attachment portions of the front cover to the vehicle body. Thus, it is eliminated to attach the front cover to the vehicle body except the lamp body unit in the upper portion of the front cover portion.

According to the invention of claim 6, the leg shield is provided with the plurality of openings to correspond the plurality of respective bulbs and is covered by the maintenance cover. Thus, the flexibility of design can be increased while enhancing maintenance performance as compared with the case in the past where the maintenance holes are provided in the front cover which has much restraint on the opening for maintenance. In addition, the plurality of openings are dividedly provided to correspond to the respective bulbs instead of a single large opening extending through a plurality of bulbs. Therefore, the area of each of the openings can be reduced to increase the flexibility of designing the vehicle.

According to the invention of claim 7, even in the case of the headlights separately left and right spaced apart from each other in a vehicle-width direction, the openings can be reduced in size whereas a single opening to be formed tends to increase in size. Thus, the flexibility of design can further be increased.

According to the invention of claim 8, the opening prepared for one lamp body is also used to maintain another lamp body; therefore, the number of openings can be reduced and further the flexibility of design can be increased.

According to the invention of claim 9, since the opening used to maintain the lamp body is disposed near the key cylinder; therefore, the key cylinder can be maintained at the same time by using the opening.

According to the invention of claim 10, while the leg shield is provided with the opening, this opening is provided with the article storage portion. Therefore, the leg shield can be reinforced to eliminate the possibility of strength degradation due to the opening. In addition, the maintenance opening is disposed between the article storage portion and the non-opening portion at the central portion in a vehicle-width direction. Therefore, the maintenance opening can be reinforced by being put between the article storage portion and the non-opening portion at the central portion in a vehicle-width direction.
- Fig. 1: is a lateral view of a large-sized scooter according to an embodiment.
- Fig. 2: is a lateral-cross-sectional view illustrating the front portion of a vehicle body.
- Fig. 3: is a front view of a front stay.
- Fig. 4: is a front view illustrating a lower portion of a body frame.
- Fig. 5: is a front view illustrating the front portion of a body cover.
- Fig. 6: is a front view of a front lighting unit.
- Fig. 7: is a plan view of a front lighting unit.
- Fig. 8: is a lateral view of the front lighting unit.
- Fig. 9: is a rear view of the front lighting unit.
- Fig. 10: is a cross-sectional view taken along line 10-10 of Fig. 6.
- Fig. 11: is a cross-sectional view taken along line 11-11 of Fig. 6.
- Fig. 12: is a cross-sectional view taken along line 12-12 of Fig. 6.
- Fig. 13: is a cross-sectional view taken along line 13-13 of Fig. 6.
- Fig. 14: is a cross-sectional view taken along line 14-14 of Fig. 6.
- Fig. 15: is a cross-sectional view taken along line 15-15 of Fig. 6.
- Fig. 16: is a view as viewed from the direction of arrow 16 of Fig. 15.
- Fig. 17: is a front view of a trimming plate.
- Fig. 18: is a lateral view of the trimming plate.
- Fig. 19: is a cross-sectional view taken along line 19-19 of Fig. 17.
- Fig. 20: is a front view of a meter visor.
- Fig. 21: is a plan view of the meter panel.
- Fig. 22: is a lateral view of the meter visor.
- Fig. 23: is a lateral view of a front cover.
- Fig. 24: is a cross-sectional view taken along line 24-24 of Fig. 5.
- Fig. 25: is a rear view of a leg shield to which a decorative panel is attached.
- Fig. 26: illustrates the leg shield with the decorative panel removed in Fig. 25.
- Fig. 27: is a lateral view of the leg shield.
- Fig. 28: illustrates the decorative panel as viewed from the direction of arrow 28 in Fig. 27.
- Fig. 29: illustrates the decorative panel as viewed from the direction of arrow 29 in Fig. 28.
- Fig. 30: is a cross-sectional view taken along line 30-30 of Fig. 25.

A preferred embodiment of the present invention will hereinafter be described with reference to the drawings.

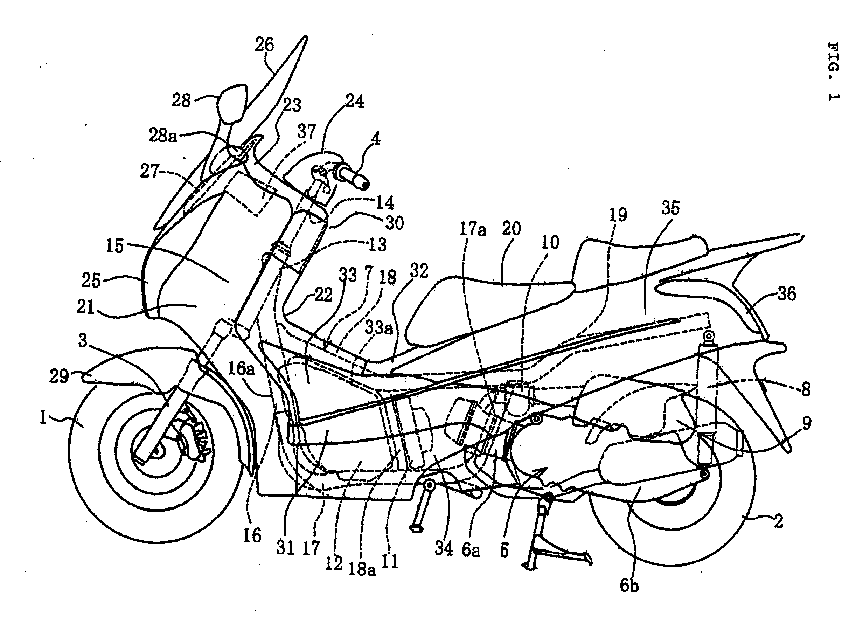

Fig. 1 is a lateral view of a large-sized scooter according to the embodiment. This scooter includes a front wheel 1 and a rear wheel 2 located at the front and rear portions, respectively, of a vehicle body. The front wheel 1 can be steered by handlebars 4 via a front fork 3 while the rear wheel 2 is driven by a swing type power unit 5. The power unit 5 integrally includes an engine 6a having a forwardly inclined cylinder and a transmission case 6b. The rear wheel 2 is cantilever supported by the rear end portion of the transmission case 6b. The power unit 5 is swingably supported at its front portion by a body frame 7 and is connected at its rear portion to the rear portion of the body frame 7 via a rear cushion unit 8. Reference numeral 9 denotes an air cleaner, 10 denotes a carburetor, 11 denotes a radiator and 12 denotes a fuel tank.

The body frame 7 is connected at its front end to a head pipe 13. The head pipe 13 turnably supports a steering shaft 14 which connects the handlebars 4 with front fork 3 upward and downward. The head pipe 13 supports a front stay 15 on its front side. A down tube 16 extends obliquely downwardly and rearward along the center of the vehicle body and merges at its lower portion with a lower pipe 17 which bifurcates leftward and rightward. The lower pipe 17 is composed of a pair of left and right portions, each of which bends, extends rearward and almost horizontally, and further upwardly bends, forming an up-and-down portion 17a passing by the side of the engine 6a.

A single upper pipe 18 extends rearward along the center of the vehicle body from the upper portion of the down tube 16 and near the head pipe 13 and merges with a seat rail 19 at its rear end. The seat rail 19 bifurcates leftward and rightward and further extends rearward. Upward and rearward reinforcing pipes 18a are each spanned between the rear end portion of the upper pipe 18 and each of the left and right lower pipes 17. The left and right up-and-down portions 17a are connected at their upper ends with the intermediate portions of the left and right seat rails 19. A tandem seat 20 is supported by the seat rails 19.

The head pipe 13 is surrounded by a front cover 21 and a leg shield 22 from the front and rear, respectively, and covered by a meter panel 23 from above. The periphery of the handlebars 4 above the meter panel 23 is covered by a handlebar cover 24. A front lighting unit 25 is attached to the front surface of the front cover 21. Reference numeral 26 denotes a windscreen, 27 denotes a meter visor, 28 denotes a side mirror, 28a denotes a mirror base cover which covers the attachment base of the side mirror and 29 denotes a front fender.

The leg shield 22 covers the rear sides of the head pipe 13 and front wheel 1. A decorative panel 30 is detachably attached to the rear upper portion of the head pipe 13, i.e., the rear side of the vehicle body. The leg shield 22 is connected to a floor panel 31 at its lower portion. The floor panel 31 is provided with a step floor on which the feet of an occupant(s) puts, the occupant sitting on the tandem seat 20.

Reference numeral 32 denotes a center panel covering from the rear portion of the leg shield 22 to the lower side of the tandem seat 20. Reference numeral 33 denotes a protector panel covering between the floor panel 31 and the rear portion of the leg shield 22 disposed above the floor panel 31. Reference numeral 34 denotes a front side panel connecting the rear lower end of the front cover 21 with the lower portion of the floor panel 31. Reference numeral 35 denotes a rear side panel covering from a portion below the tandem seat 20 to a most rear portion of the vehicle body. Incidentally, a pair of left and right rear lighting units each of which unites 36 a tail lamp and other components are provided on the lateral side surfaces of the rear side panel 35.

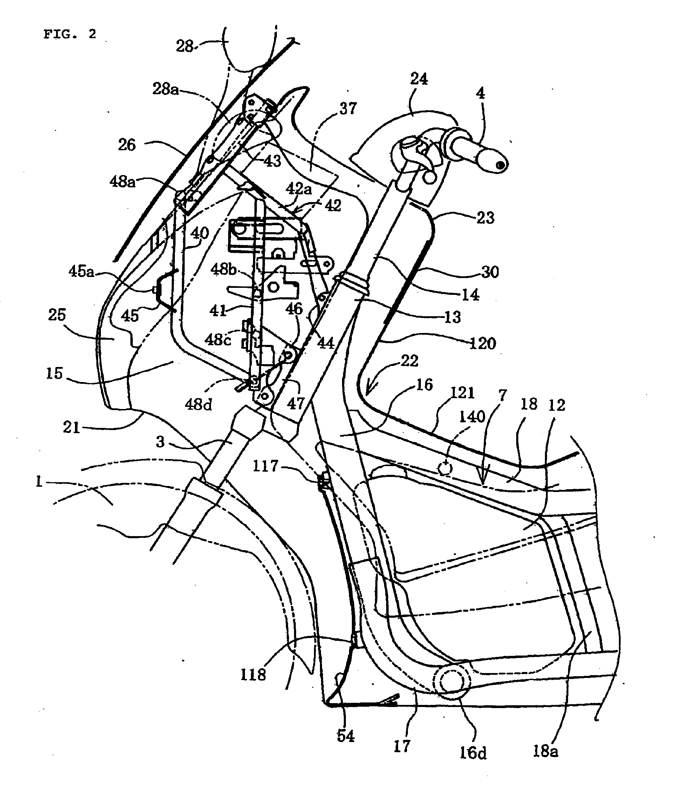

Fig. 2 is a lateral cross-sectional view illustrating the front portion of the vehicle body. The front stay 15 is a rigid support structure which is part of the body frame. The support structure is integrally composed of a plurality of pipe members and brackets and is adapted to support the front lighting unit 25, the meter 37 and the like. The pipe members extend upward and downward. The pipe members include a front pipe 40, a central pipe 41 and a rear pipe 42 in the back and forth direction as viewed from the side. The rear pipe 42 bends at its central portion so as to form an almost dogleg and is provided to extend rearward and obliquely downward as a whole. In addition, the front portion of the rear pipe 42 is formed as a gently inclined portion on which a meter 37 is secured.

The rear pipe 42 is connected at its front end with a bracket 43 which slants almost parallel to the windscreen 26. The windscreen 26 is bolted at its lateral lower portion to the bracket 43 and a stay 28a of the side mirror 28 is attached at its lower end to the bracket 43. The rear pipe 42 is bolted at its rear end to a stay 44 provided on the front surface upper portion of the head pipe 13.

The front pipe 40 has an upper portion which extends upward and downward and is connected at its upper end to the lower end of the bracket 43. A stay 45 is attached to the middle portion front surface of the upper portion of the front pipe 40. The front lighting unit 25 is bolted to the stay 45. The front pipe 40 has a lower portion which bends obliquely downwardly and connects with a bracket 46. This bracket 46 is bolted to a stay 47 provided at the front surface lower portion of the head pipe 13. The central pipe 41 is integrally connected to the bracket 46 at its lower end. The central pipe 41 extends straightly upward and downward and has an upper end which is connected to a portion of the rear pipe 42 forward of a bent portion thereof.

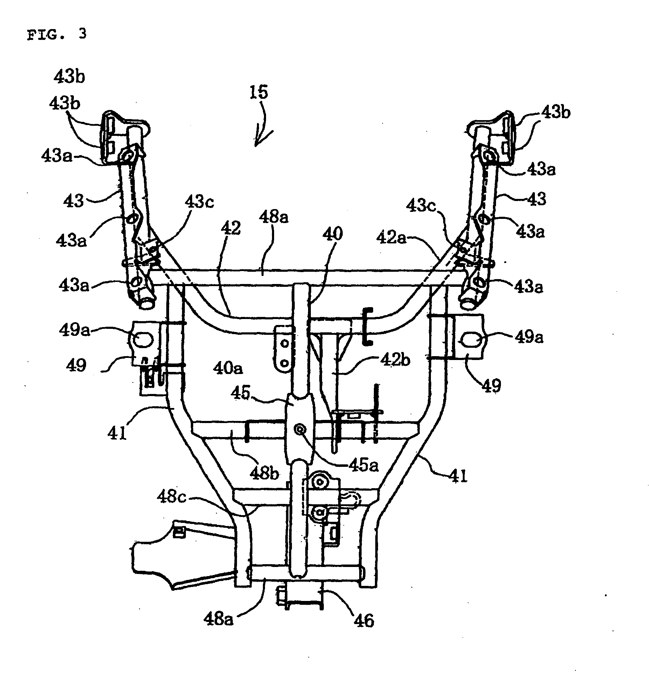

Fig. 3 is a front view of the front stay 15. The front pipe 40 is solely provided at the center of the vehicle body. The central pipes 41 are left-right paired so as to be spaced apart from each other on both sides of the front pipe 40 and have respective upper ends which are integrally connected to each other via a cross pipe 48a. The rear pipe 42 has upper portions 42a which extend leftward and rightward and then are spaced apart from each other as they go upward, being welded to the corresponding intermediate portions of the brackets 43. The rear pipe 42 has a lower portion 42b which is disposed so as to be leftward offset from the front pipe 40 and is connected to the stay 44 (Fig. 2) provided on the lateral side of the head pipe 13.

Attachment stays 49 of the front lighting unit 25 are provided at the corresponding upper portions of the left and right central pipes 41 so as to protrude outwardly laterally. The attachment stays 49 are formed with respective oval holes 49a to which cushion rubber 49b is attached. Thus, the front lighting unit 25 is engaged with the oval holes in a vibration-absorbing manner (detailed later). The left and right central pipes 41 are connected to each other at their intermediate portions by a cross pipe 48b and additionally by shorter cross pipes 48c, 48d located below the cross pipe 48b, for increasing the entire rigidity of the front stay 15.

The bracket 43 is provided with attachment holes 43a for the windscreen 26 which are spaced almost equally apart from each other upward and downward. In addition, the bracket 43 is provided at its upper end with an attachment portion (nut) 43b for the mirror. Reference numeral 43c denotes an attachment portion for a trim plate described later.

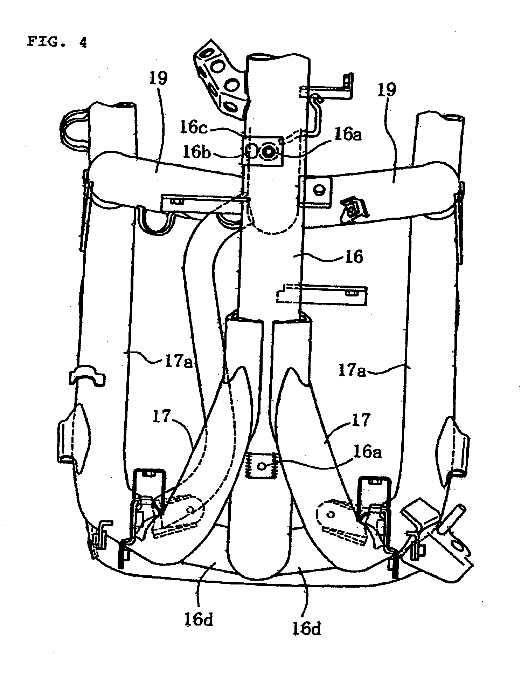

Fig. 4 is a front view illustrating a portion of the body frame 7 below the head pipe 13. The upper pipe 18 is welded at its front end to the up-down-directional intermediate portion of the single down tube 16 disposed to extend upward and downward along the center of the vehicle body. The upper pipe 18 extends leftward and rightward, then extending rearward, and connects with the left and right up-and-down portions 17a. A bracket 16c is welded to a front surface portion of the down tube 16 slightly above a portion where the upper pipe 18 is joined to the down tube 16. A nut 16a and a positioning hole 16b are attached side by side to this bracket 16c. The rear surface upper portion of the front cover 21 is attached to this nut 16a. In addition, a nut 16a is welded to the lower portion of the down tube 16. The down tube 16 is joined at its lower end to the cross pipe 16d, which extends leftward and rightward and connects with the corresponding left and right lower pipes 17.

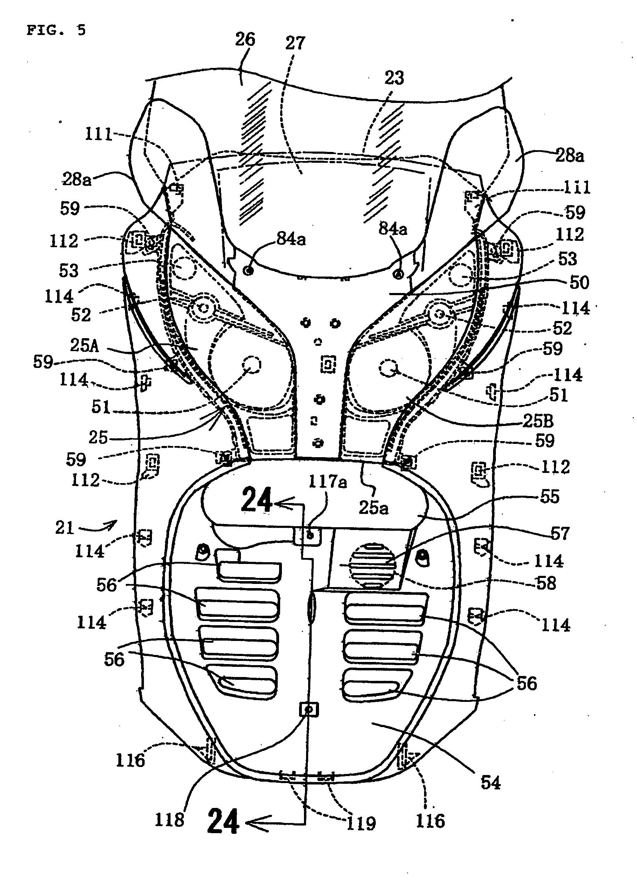

Fig. 5 is a front view of a body cover front portion including the front cover 21 and front lighting unit 25. The front lighting unit 25 is attached to the upper half portion center of the front cover 21. The upper portion of the front lighting unit 25 is connected to the lower portion of the windscreen 26 via the trimming plate 50 as viewed from the front. The front lighting unit 25 exhibits the external appearance of a two-light type headlight clearly divided leftward and rightward by the trimming plate 50 which is covered on the center and almost Y-shaped. However, in practice the front lighting unit 25 is formed as a lamp body unit which is previously integrally composed of left and right portions. The left and right portions are symmetrically and obliquely arranged in such a manner that their upper portions are spaced apart from each other as they go upward. It is to be noted that the left and right portions are called a right separate lamp body unit 25A and a left separate lamp body unit 25B, respectively.

Each of the right and left separate lamp body units 25A and 25B integrally includes a headlight, a position light and a turn-signal lamp, as lamp bodies, which are arranged in the up-and-down direction. A bulb 51 of the headlight, a bulb 52 of the position light and a bulb 53 of the turn-signal lamp are also arranged in the obliquely up-and-down direction, that is, located outwardly in this order. Each lateral portion of the right and left separate lamp bodies 25A, 25B is attached to attachment projections 59 which are provided at three positions in the up-and-down direction and inside a portion along the joint edge portion with each of the right and left separate lamp body units 25A, 25B.

A lower end edge portion 25a of the front lighting unit 25 serves as an upper wall of an air guide port 55 which is formed on the center of the lower half portion of the front cover 21 and at the upper portion of the air guide recess portion 54. The air guide recess portion 54 is provided with louvers 56 which serve together with the air guide port 55 to take running air inside the front cover 21 and lead it to a radiator 11 and the power unit 5 (Fig. 1) disposed rearward of the air guide recess portion 54. A horn louver 57 is provided on the left side of the upper portion of the air guide recess portion 54 so as to pass therethrough alarm whistle of a horn 58 disposed inside the horn louver.

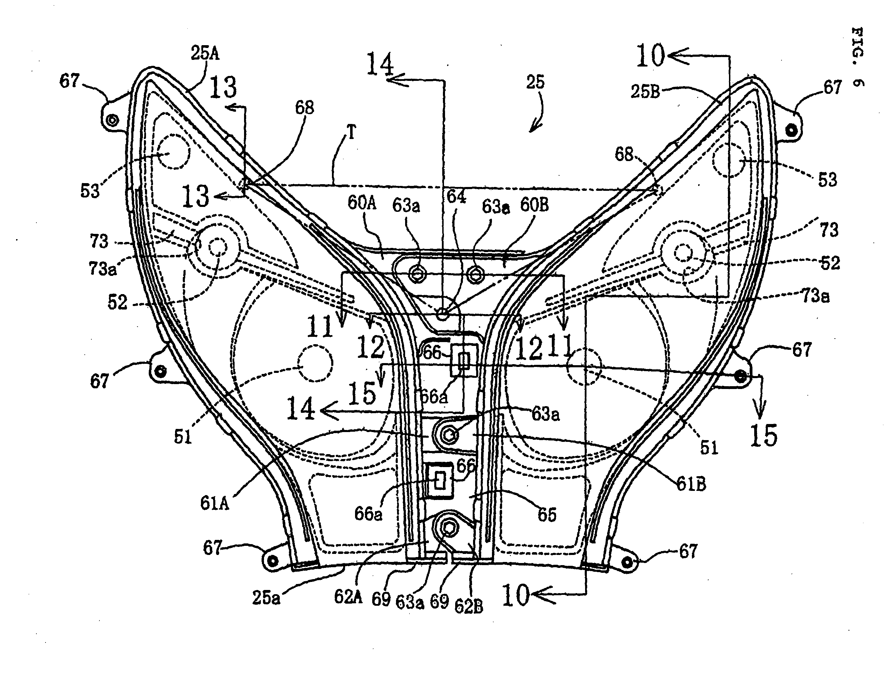

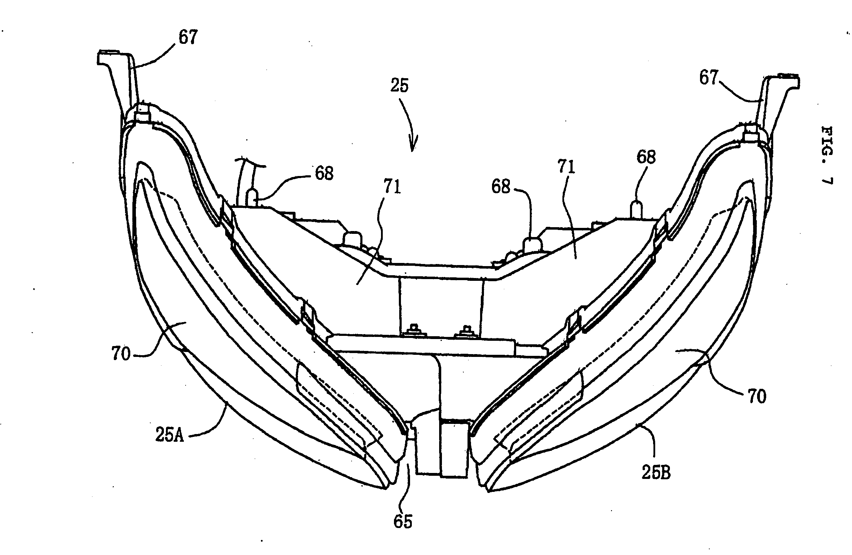

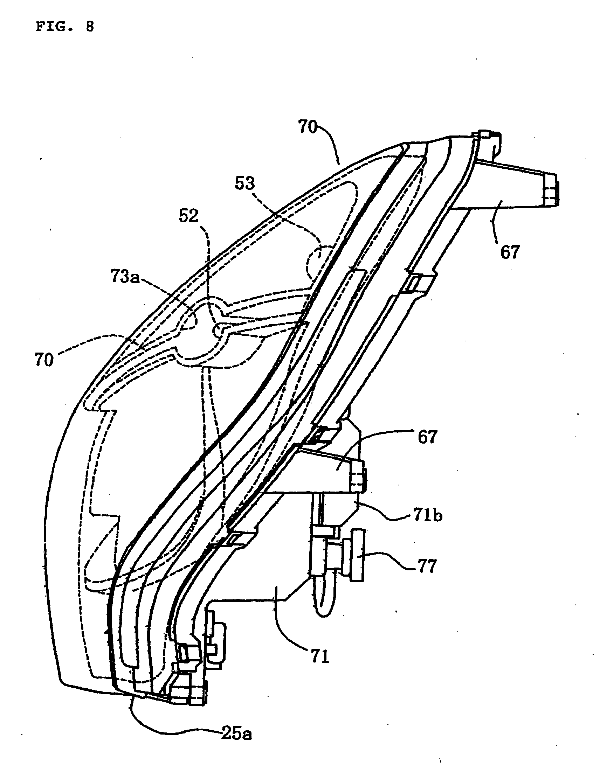

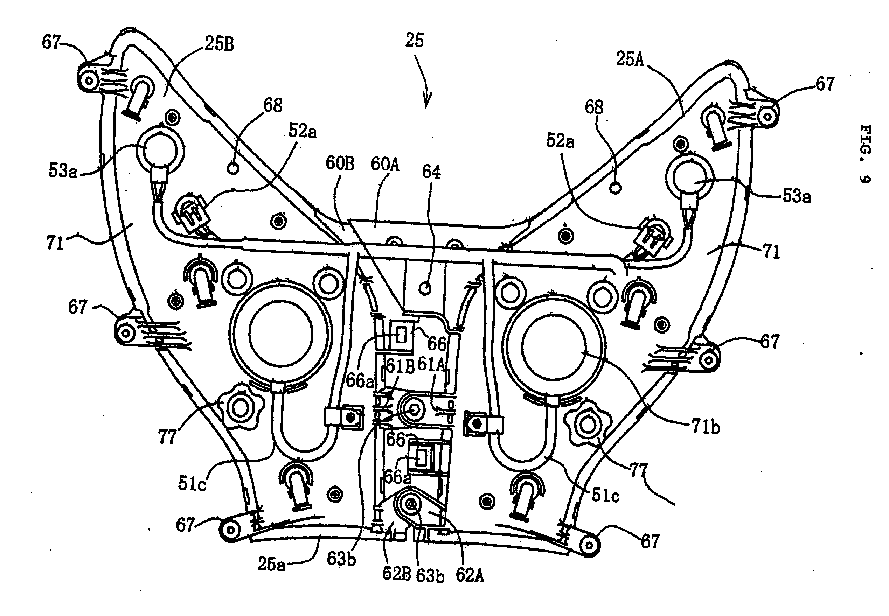

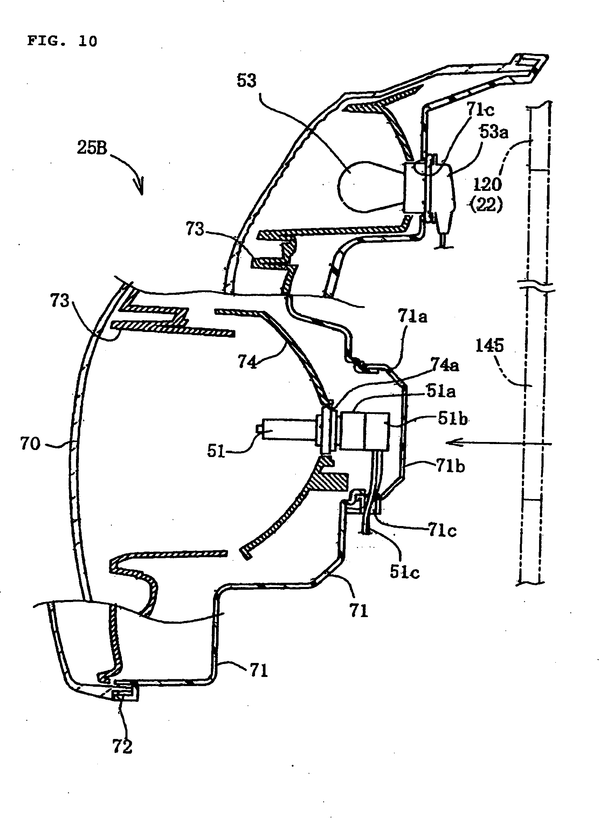

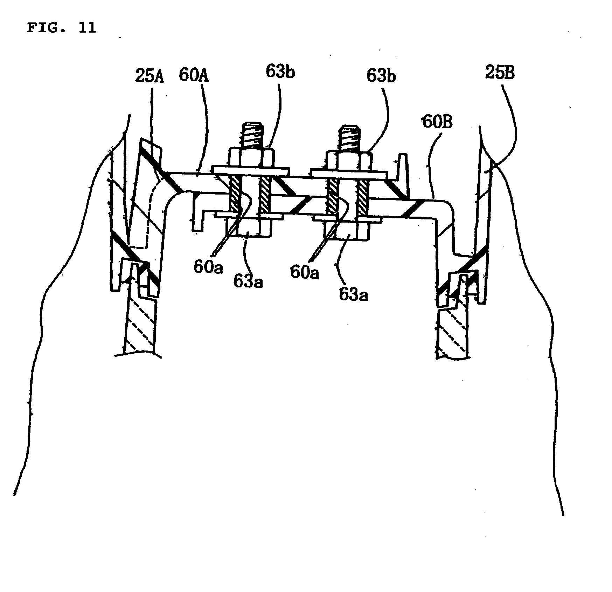

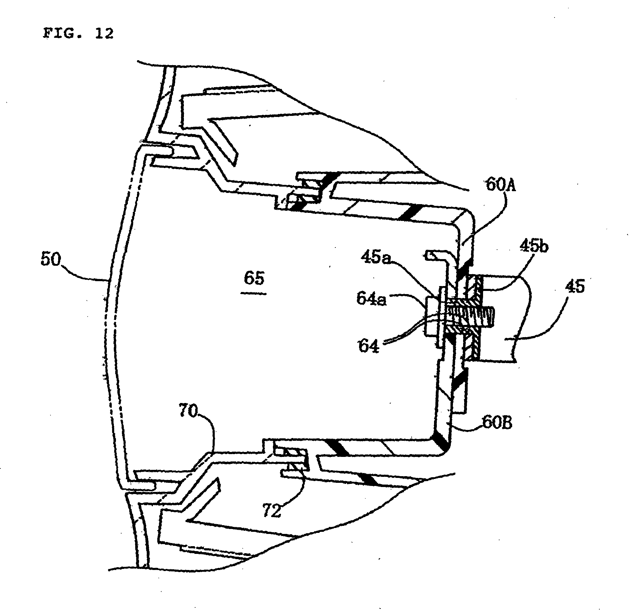

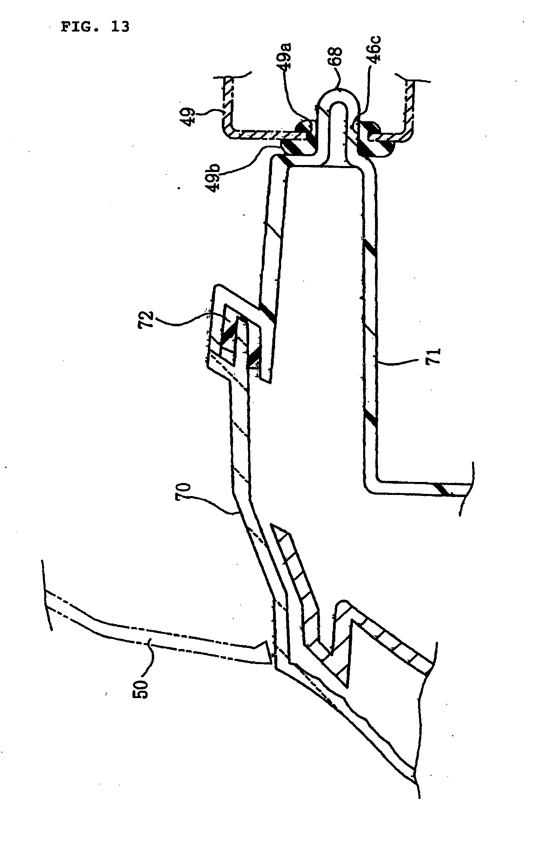

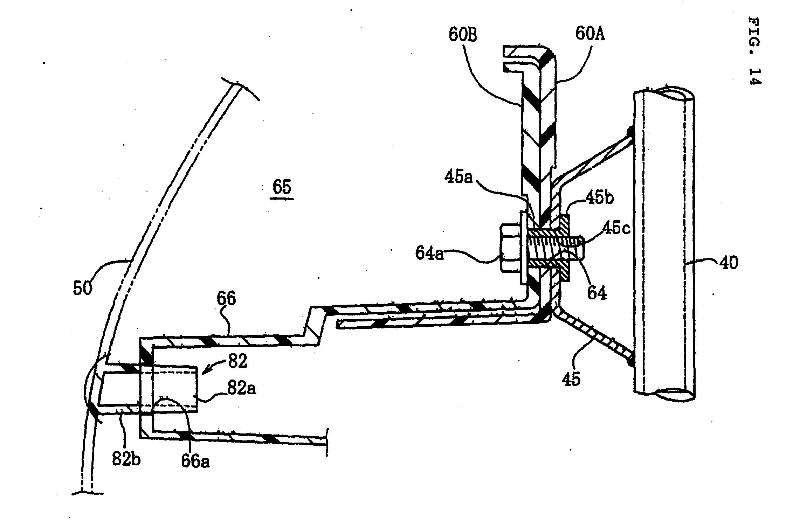

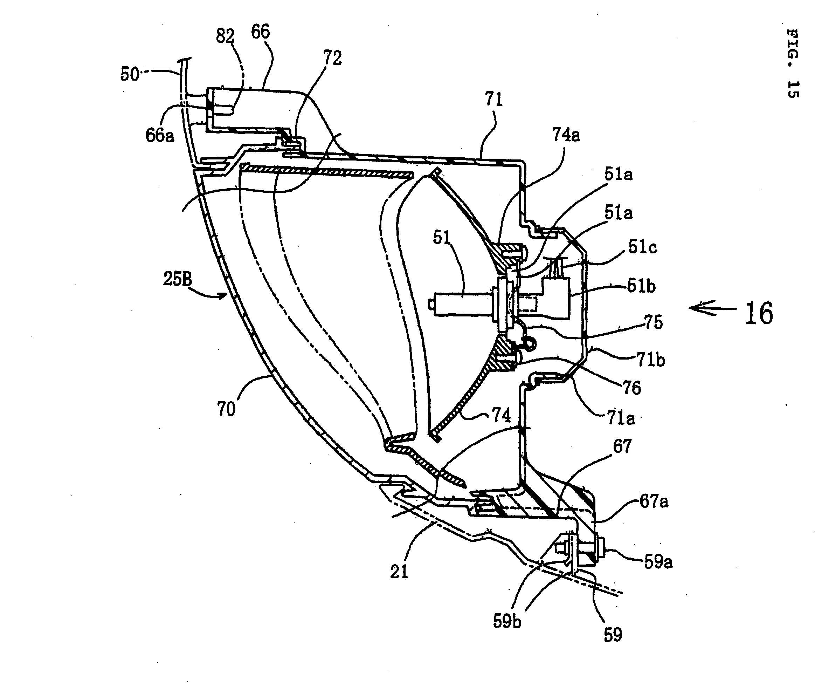

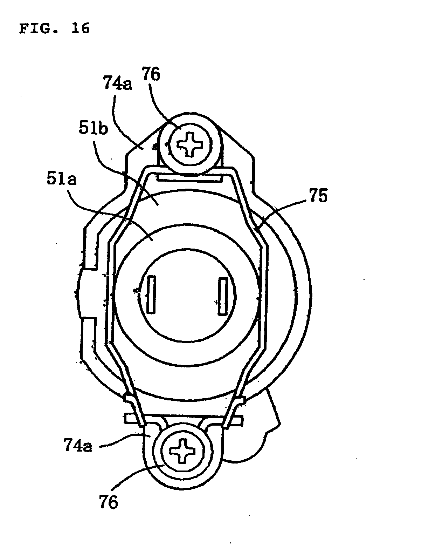

The front lighting unit 25 is further detailed in the following. Fig. 6 is a front view of the front lighting unit 25, Fig. 7 is a plan view, Fig. 8 is a lateral view, and Fig. 9 is a rear view. Fig. 10 is a cross-sectional view taken along line 10-10 of Fig. 6. Fig. 11 is a cross-sectional view taken along line 11-11 of Fig. 6. Fig. 12 is a cross-sectional view taken along line 12-12 of Fig. 6. Fig. 13 is a cross-sectional view taken along line 13-13 of Fig. 6. Fig. 14 is a cross-sectional view taken along line 14-14 of Fig. 6. Fig. 15 is a cross-sectional view taken along line 15-15 of Fig. 6. Fig. 16 is a view as viewed from arrow 16 of Fig. 15.

A unit structure of the front lighting unit 25 is first described. As shown in the figures, the front lighting unit 25 is a temporarily assembled body obtained by integrally connecting the separate lamp bodies 25A, 25B at their central portions which have individually been manufactured in the initially leftward and rightward separated state. Each of the separate lamp body units 25A, 25B before the joint is provided with joint projection pieces 60A, 60B, 61A, 61B, 62A, 62B which project toward the corresponding counterparts (Fig. 6). Respective counterparts of the projection pieces 60A and 60B; 61A and 61B; and 62A and 62B superpose each other and are connected with each other with bolts 63a and nuts 63b (see Fig. 11).

The projection pieces 60A, 60B located above the other projection pieces are made larger than the others. The projection pieces 60A, 60B are attached by fixation with bolts 63a and nuts 63b located on the back side and by co-fastening to a stay 45. The bolts 63a and nuts 63b are inserted into corresponding attachment holes 60a (see Fig. 11) provided at two positions, i.e., in the left and right upper portions of the projection pieces 60A, 60B. The co-fastening to the stay 45 is carried out at the attachment hole 64 provided at one position below the attachment hole 60a. The attachment hole 64 is adapted to receive a nut 45a (Figs. 3 and 4) inserted therethrough. This nut 45a is provided on the stay 45 of the front stay 15. As shown in Figs. 12 and 14, a bolt 64a is inserted into the nut 45a to co-fasten the three members together.

As apparent from Fig. 14, the nut 45a has a flange 45b. The shaft portion of the nut 45a is passed through the hole 45c of the stay 45 and projected by a length almost equal to the thickness of the projection pieces 60A, 60B superposed. The flange 45b is welded to the back side of the stay 45. At the time of attachment, the shaft of the nut 45a is passed through each of the attachment holes 64 of the superposed projection pieces 60A, 60B, thus enabling temporary joint of the projection pieces 60A, 60B.

With this attachment, a recess groove portion 65 adapted to receive the leg portion of the trimming plate 50 is formed between the right and left separate lamp body units 25A, 25B (see Fig. 7). Engagement portions 66 are formed in the recess groove portion 65 so as to project from the right and left separate lamp body units 25A, 25B. The engagement portions 66 are formed with respective engagement holes 65a (see Fig. 6). Respective joint projection portions 67 are formed on the outer edge portions of the right and left separate lamp body units 25A, 25B and internally bolted to the front cover 21.

The respective upper portions of the right and left separate lamp body units 25A, 25B are each formed on its central rear surface with pins projecting rearward (see Fig. 7). As shown in Fig. 13, the pins 68 are inserted via elastic members into the holes 46c of cushion rubbers 46b attached to oval holes 46a of the bracket 46 (see Fig. 3) provided on the front stay 15. As such, the lamp body units 25A, 25B are rubber-mounted to the front stay 15. Three portions attached to the front stay 15 are arranged to form a rough inverted triangle T using the rubber mount of the left and right pins 68 and the rigid connection of the central attachment hole 64 (see Fig. 6).

Referring to Fig. 15, the joint projection portion 67 projects rearward and elongatively and at its end bends laterally to form a flange 67a. The flange 67a is superposed on the attachment projection 59 formed on the front cover 21 and the flange 67a and the attachment projection 59 are fastened to each other with a bolt 59a and a nut 59b.

A description is next made of the internal structure of the front lighting unit 25. Referring to Fig. 10, the front lighting unit 25 is integrally formed by allowing a lens 70 and a housing 71 to face each other via a seal 72 so as to form a hollow chamber. The hollow chamber is internally partitioned by a partition wall 73 into a lower portion and an upper portion. The lower portion houses therein the bulb 51 of the headlight and the upper portion houses therein the bulb 53 of the turn-signal lamp. The partition wall 73 is provided at the intermediate portion (see Figs. 6 and 7) and partially expanded in a circular space manner to form a bulb chamber 73a and house the bulb 52 of the position light therein.

The bulb 51 of the headlight is fitted into a bulb hole 74a formed in the bottom portion of a reflector 74 so as to project forward. A connector 51db is detachably attached to an electrode portion 51a of the headlight bulb 51. Electric wires 51c connected to the connector 51b extend to the outside through a wire hole 71c formed on the side of a cap 71b covered on a maintenance hole 71a of the housing 71.

The reflector 74 is designed to be swingable upward for aiming adjustment. Turning an adjustment screw 77 (Figs. 8 and 9), the reflector 74 swings upward and downward to change a light axis. The description of this mechanism is omitted because the known can be used.

The bulb 51 of the headlight can be attached and detached, together with the electrode portion 51a, to and from the reflector 74. The cap 71b is removed and then the bulb 51 and electrode portion 51a of the headlight are picked out of the reflector 74. Thus, the bulb 51 of the headlight can be replaced from the rear side of the vehicle body. A socket portion 53a of the bulb 53 of the turn-signal lamp is directly and detachably fitted into the opening of a maintenance hole 71c formed in the housing 71 and thus can be replaced from the rear of the vehicle body.

Referring to Fig. 15, the electrode portion 51a is fixedly pressed by a spring 75 so as not to disengage therefrom. The spring 75 is secured, with screws 76, to a boss 74a formed to project from the rear surface of the reflector 74.

Referring to Fig. 16, the spring 75 is almost rectangular. The boss portion of the electrode portion 51a is fitted into the central portion of the spring 75. The spring 75 presses the flange portion 51b integrally formed with the electrode portion 51a. To replace the bulb 51 of the headlight, the screws 76 are unscrewed, the spring 75 is removed and then the bulb 51 and electrode portion 51a of the headlight are picked out rearward.

The bulb 52 of the position light can be replaceable in the same manner as above. In Fig. 9, reference numeral 52a denotes a connector of the bulb 52 of the position light. Also the bulb 52 of the position light can be picked out rearward by removing the connector 52a. As schematically shown in Fig. 10, the bulb 51 of the headlight, the bulb 52 of the position light and the bulb 53 of the turn-signal lamp are maintained or replaced by accessing them for working in the arrow direction through a maintenance hole 145 of the leg shield 22 provided rearward of the bulbs. In this figure, the position of the leg shield 22 and the size of the maintenance hole 145 are changed from the actual ones for the convenience of explanation.

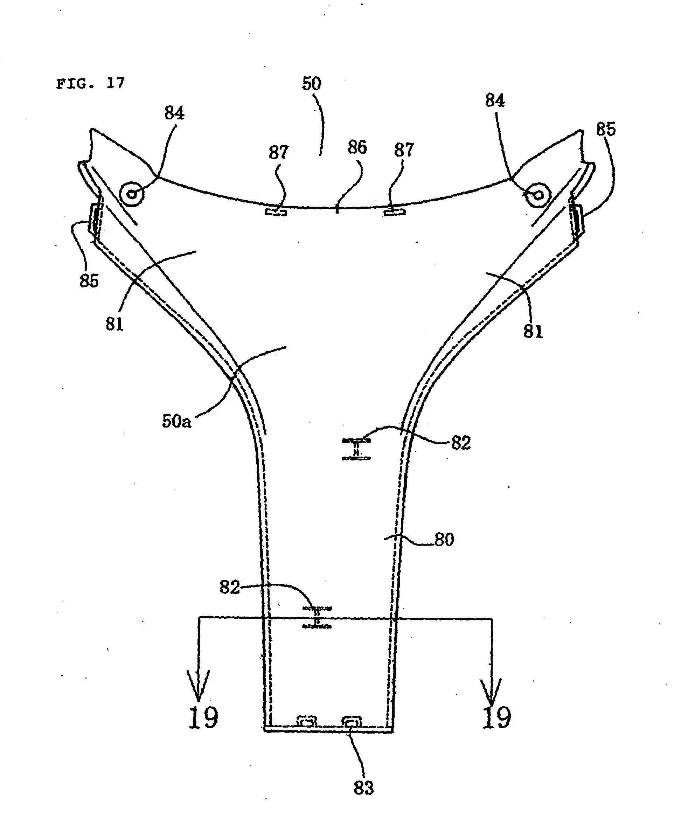

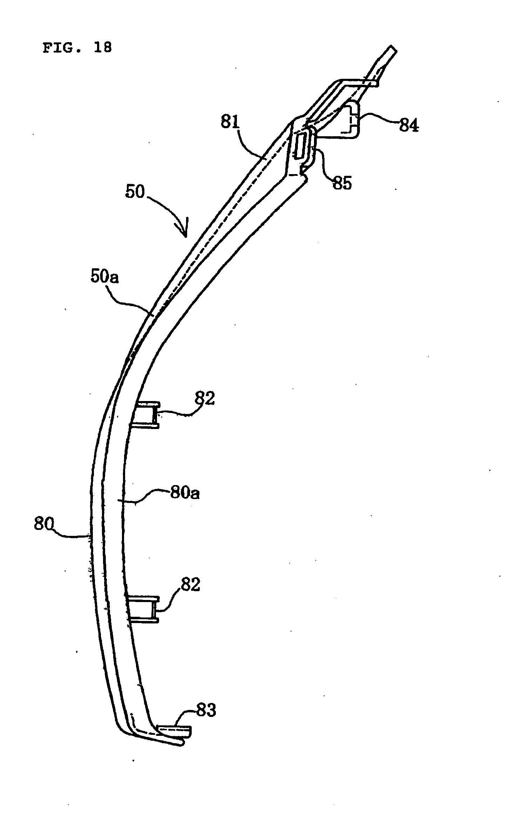

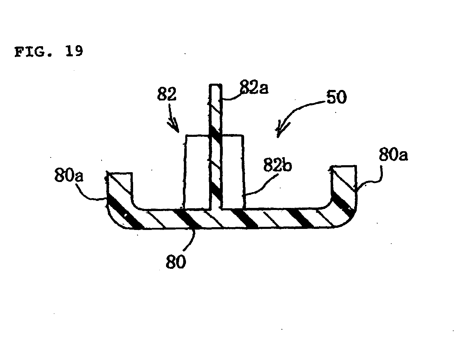

The trimming plate is next detailed. Fig. 17 is a front view of the trimming plate 50, Fig. 18 is a lateral view, and Fig. 19 is a cross-sectional view taken along line 19-19 of Fig. 17. In these figures, the trimming plate 50 is integrally composed of a leg portion 80 extending downward from its central portion 50a and a pair of arm portions 81 extending obliquely upwardly and leftward and rightward. The leg portion 80 is integrally formed with insertion projections 82 which project reward i.e., toward the back of the sheet surface. The insertion projections 82 are arranged to be spaced upward apart from each other and offset from each other leftward and rightward.

Referring to Fig. 14, the insertion projection 82 has a base portion formed as a pair of ribs 82b and an upper portion formed as a tongue piece portion 82a elongatively projecting from the ribs 82b. The insertion projection 82 is almost H-shaped as viewed from the projecting direction (hereinafter, H-shaped components in the figures have the same structure as above). The leg portion 80 is united with the front lighting unit 25 by inserting the tongue piece portions 82a of the upper and lower insertion projections 82 into the corresponding engagement holes 66a of the upper and lower engagement portions 66.

In this way, if the leg portion 80 is mounted on the front lighting unit 25, it covers the recess groove portion 65 (Fig. 14). The left and right portions of the leg portion 80 are formed as flange-like side walls in cross-section (Fig. 19). If the lateral side walls 80a are fitted into the recess groove portion 65 at the time of attachment, the surface of the leg portion 80 is almost flush with the front lighting unit 25 (Fig. 12). Referring to Fig. 18, the leg portion 80 is provided with a step-difference portion 83 at its lower end. When the leg portion 80 is mounted to the front lighting unit 25, a projection 69 (Fig. 6) provided at the lower end of the front lighting unit 25 is integrally fitted to the step of the step-difference portion 83.

Referring to Fig. 17, each of the arm portions 81 is provided with a boss 84 at its leading end portion. The lower end portion of the meter visor 27 is superposed on the leading end portion of the arm portion 81 and they are integrally joined together with screws 84a (Fig. 5). A projection piece 85 is projectingly formed at the leading edge portion of the arm portion 81 in the vicinity of the boss 84. The projection piece 85 is engaged with the joint edge of the mirror base cover 28a.

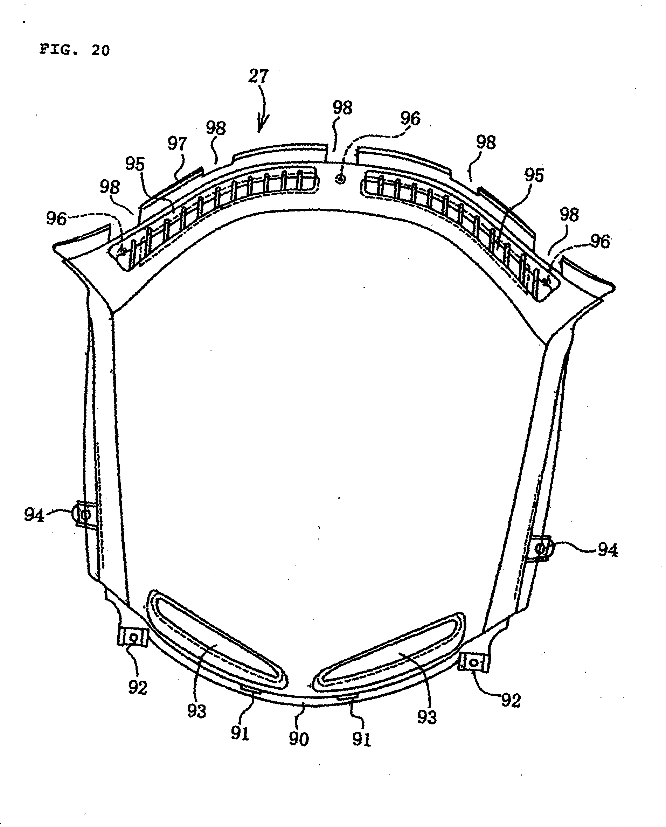

The meter visor is next described. Fig. 20 is a front view of the meter visor 27. The meter visor 27 has a lower edge portion serving as a flange 90 which is formed like a step recessed rearward by one stage. An upper end edge 86 of the trimming plate 50 is superposed on the flange 90 so that projections 91 of the flange 90 are engaged with recess portions 87 (Fig. 17) provided near the upper end edge 86.

Respective projections 92 are formed near the left and right end portions of the flange 90. The projections 92 are superposed, from below, to the corresponding bosses 84 (Fig. 18) formed on the leading ends of the arms 81 of the trimming plate 50, thereby being formed into one unit with screws. Respective air guide ports 93 are provided near the flange 90 and on the left and right of the center of the vehicle body so as to take running air in the inside of the meter panel 23.

The meter visor 27 is formed with engaging projections 94 on both lower lateral portions thereof so as to project laterally. The engaging projections 94 are superposed on the rear pipe 42 and screwed to the attachment portion 42c (Fig. 3) of the rear pipe 42. Louvers 95 are separately provided left and right on the upper portion of the meter visor 27 so as to extend along the edge portion thereof. The louvers 95 are adapted to spray part of the running air taken in from the air guide ports 93 to the inner surface of the windscreen 26 for preventing cloudiness.

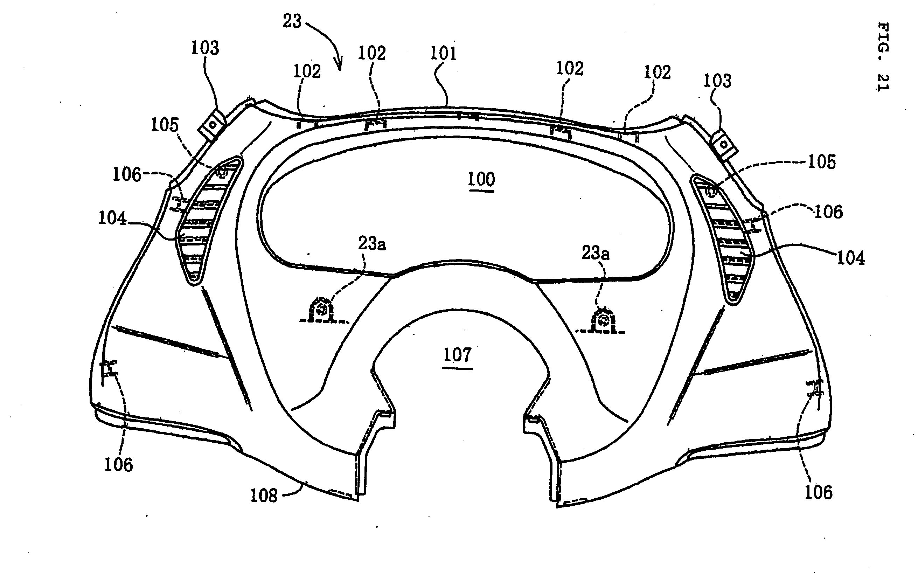

Bosses 96 are provided at the center, left and right, respectively, of the upper portion having the height equal to that of the louvers 95 so as to project from the rear surface thereof. The bosses 96 are engaged with the meter panel 23. The meter visor 27 has an upper end edge which is formed with a flange 97 recessed rearward by one stage. The flange 97 is inserted into the inside of the front dual wall portions of the meter panel 23. The flange 97 is formed with notches 98 spaced appropriately apart from each other. The notches 98 are engaged with engaging projections 102 provided on the joint portion of the meter panel 23 (see Fig. 21).

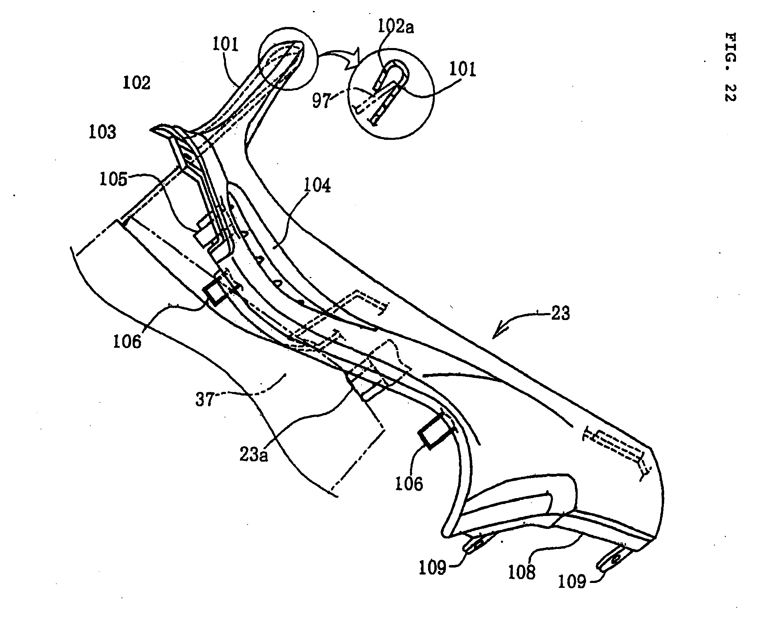

Fig. 21 is a plan view of the meter panel 23 and Fig. 22 is a side view. The meter panel 23 is provided with a meter hole 100 on the central front side thereof and the meter 37 (Fig. 2) are exposed to the meter hole 100. An erecting wall 101 is formed in front of the meter hole 100 so as to incline rearward and project obliquely upwardly, thus preventing excessive external light from being incident on the meter. The erecting wall 101 is formed as a dual wall having an upper end bent back to the outside, forming an almost inverted-J-letter portion. The flange 97 of the meter visor 27 is fitted into this inverted-J-letter portion (see Fig. 22).

The erecting wall 101 formed as a dual wall is integrally provided with the engaging projections 102 on the internal upper end thereof which are engaged with the corresponding notches 98 (Fig. 20). As shown in an enlarged cross-section in Fig. 22, the flange 97 of the meter visor 27 is fitted into the dual wall portion so that the erecting wall 101 and its turned edge portion grip the flange 97 therebetween. Respective front portions of the left and right edge portions of the meter panel 23 are superposed on the mirror base 28a (Fig. 5) and screwed thereto with attachment pieces 103 projecting therefrom leftward and rightward, respectively. Similarly, respective intermediate portions of the left and right edge portions are superposed on the upper end edge portion of the front cover 21 and respective rear portions are superposed on the upper end edge portion of the leg shield 22. Respective louvers 104 are provided on the left and right side portions of the meter panel to blast running air toward an occupant therefrom.

Bosses 105 and attachment pieces 106 are integrally formed on the back upper surface of the meter panel 23 and in the vicinities of the respective louvers 104 so as to project downward. Other attachment pieces 106 are provided at the rear end portion of the meter panel. Reference numeral 107 denotes a notched portion which is adapted to receive the steering shaft 14 passed therethrough and provided centrally rearward of the meter hole 100 for the handlebars. Reference numeral 108 denotes a rear end edge which is superposed on the upper end edge of the leg shield 22. Reference numeral 23a denotes a boss which extends downward and reaches the meter 37. Similarly, also the circumferential wall lower end of the meter hole 100 reaches the meter 37.

Apparent from Fig. 22, the rear end edge 108 of the meter panel 23 is integrally provided with attachment pieces 109 projecting downward. The attachment pieces 109 are inserted into the upper end edge of the meter panel 23.

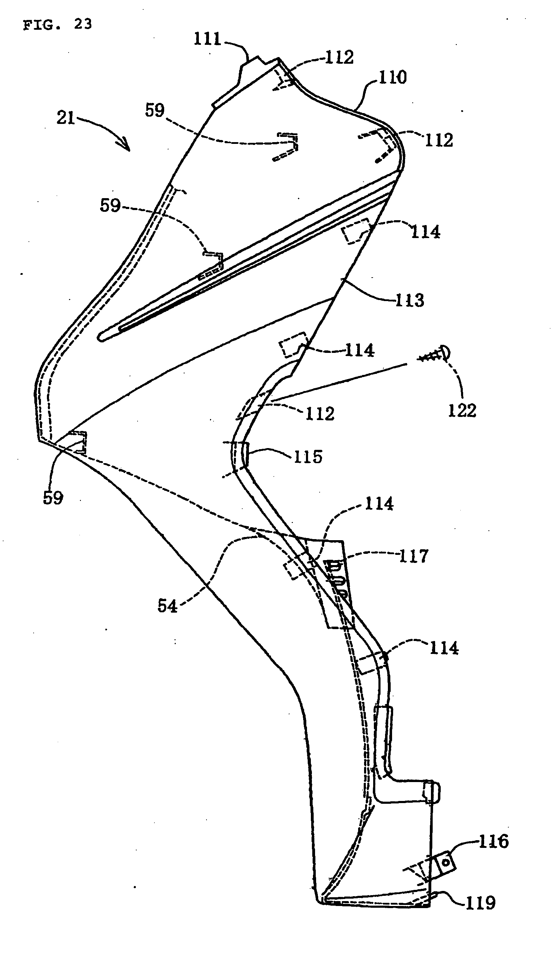

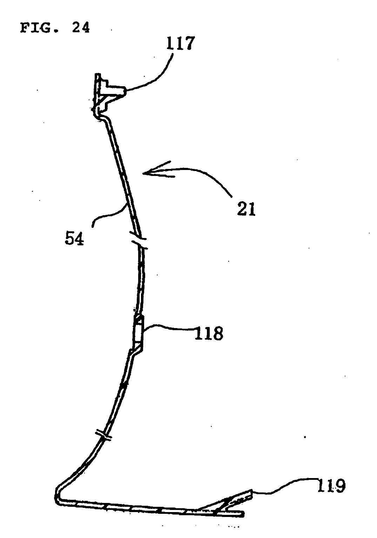

Fig. 23 is a side view of the front cover 21 and Fig. 24 is a cross-sectional view taken along line 24-24 of Fig. 5. An upper end edge 110 of the front cover 21 is superposed on the meter panel 23 from below and an front end portion of the front cover 21 is superposed on the mirror base 28a (Fig. 5) from below and screwed thereto. Reference numeral 112 denotes a joint portion with the attachment piece 106 (Fig. 22) of the meter panel 23.

An upper portion of the rear end edge 113 is superposed on the joint edge portions between the upper portion of the leg shield 22 and the decorative panel 30 (Fig. 2). Reference numeral 114 denotes a boss which is adaptable for attachment of the leg shield 22, projects inward of the vehicle body, and inclines forwardly downwardly as viewed from the side. The up-down direction intermediate portion of the rear end edge 113 forms a forwardly most-bent portion, which is provided with an attachment portion 115 to be engaged with an attachment projection (described later) of the leg shield 22. The rear end edge 113 is provided at its lower end portion with an attachment piece 116 which projects rearward and obliquely upwardly and is bolted to the front end of the front side panel 34.

Referring to Fig. 24, a boss 117 is provided to project rearward at an upper end of a central portion in the lower portion of the front cover 21 and in a portion forming a wall surface of the air guide recess portion 54. The boss 117 is inserted into and positioned at a positioning hole 16b (Fig. 4) and bolted to the nut 16a (Fig. 4) provided adjacently to the positioning hole 16b through a through-hole 117a (Fig. 5). The positioning hole 16b is provided in the front surface of the down tube 16 to extend in the up-and-down direction. The front cover 21 is provided with an attachment portion 118 below the boss 117 and near the lower end thereof. The attachment portion 118 is superposed on another nut 16a provided below the nut 16a and fixedly screwed thereto. These portions are first attached to the side of the body frame 7, thereby facilitating the subsequent assembly work. The front cover 21 is integrally provided with a pressing rib 119 below the attachment portion 118 and at the lower end and rear end thereof. The pressing rib 119 is integrally joined to the front end of the front side panel 34.

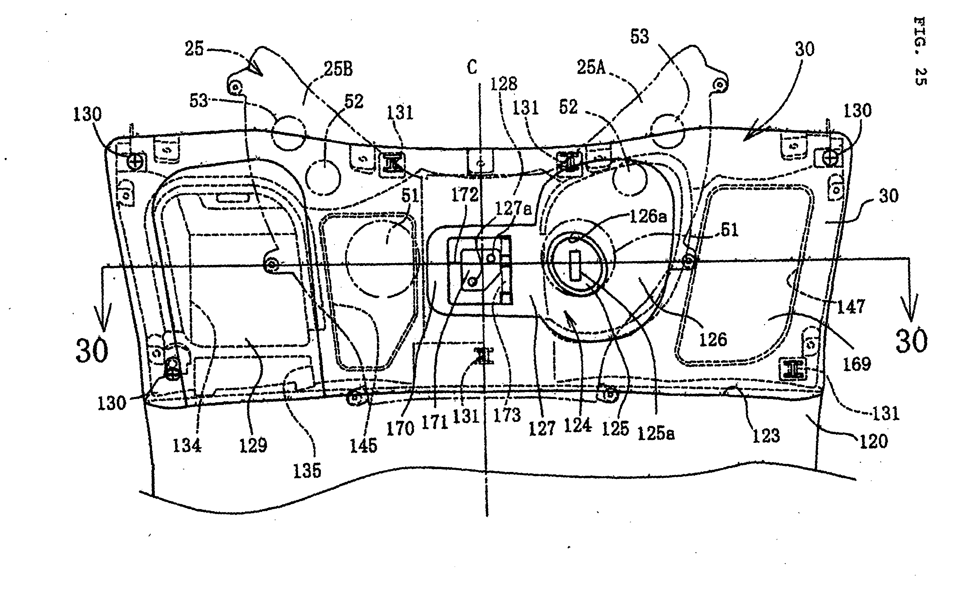

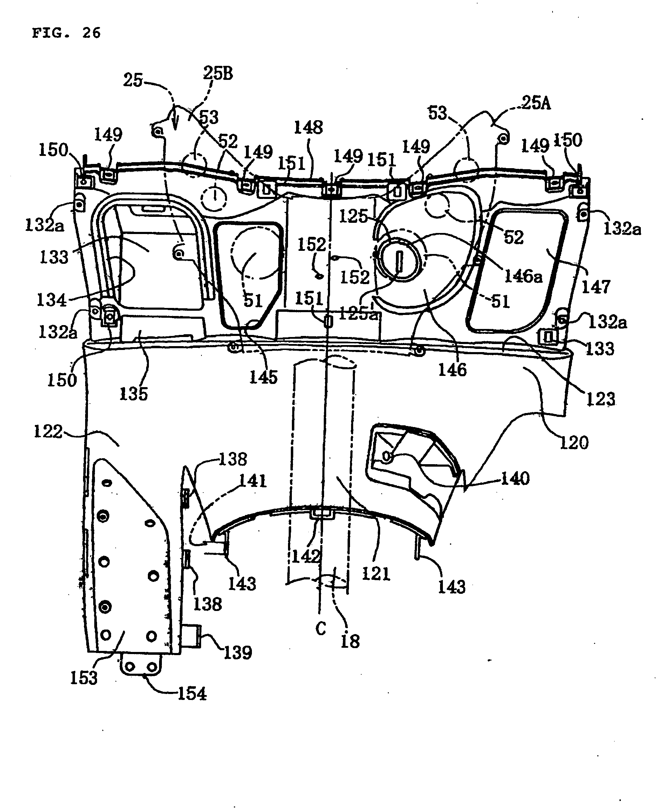

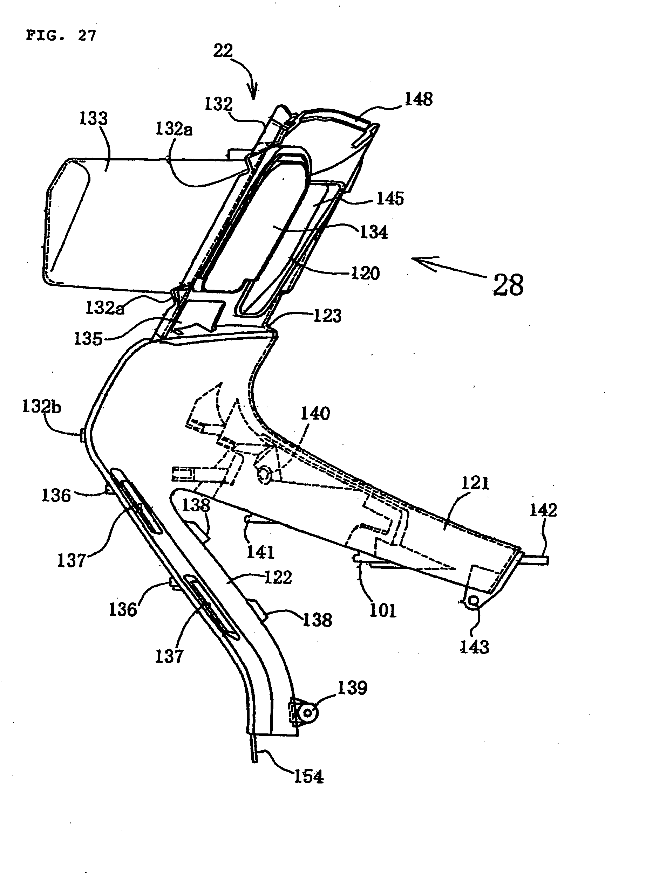

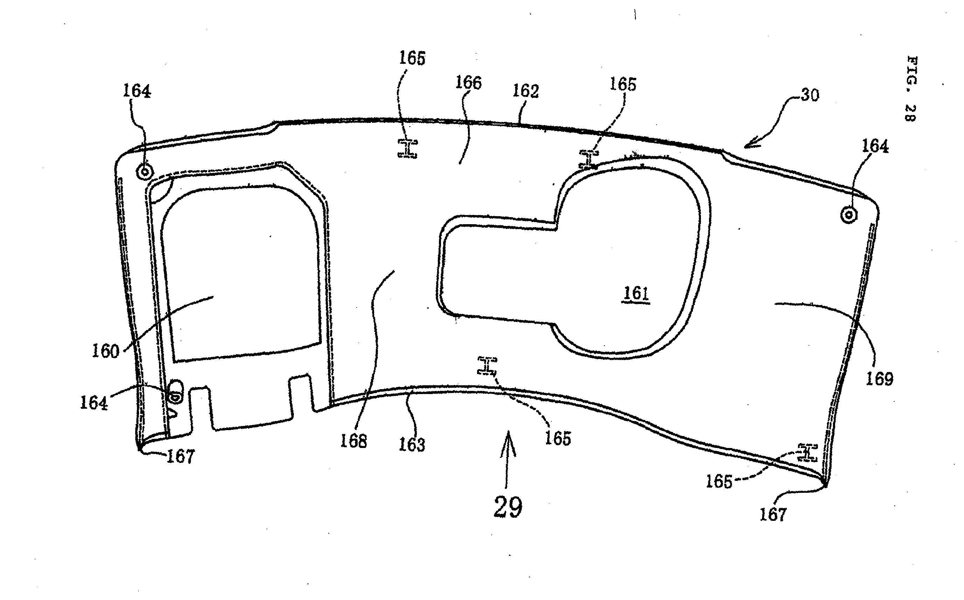

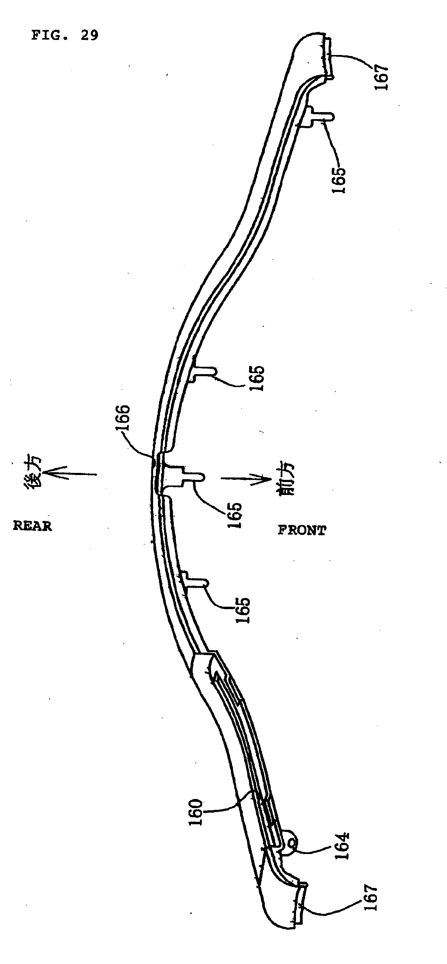

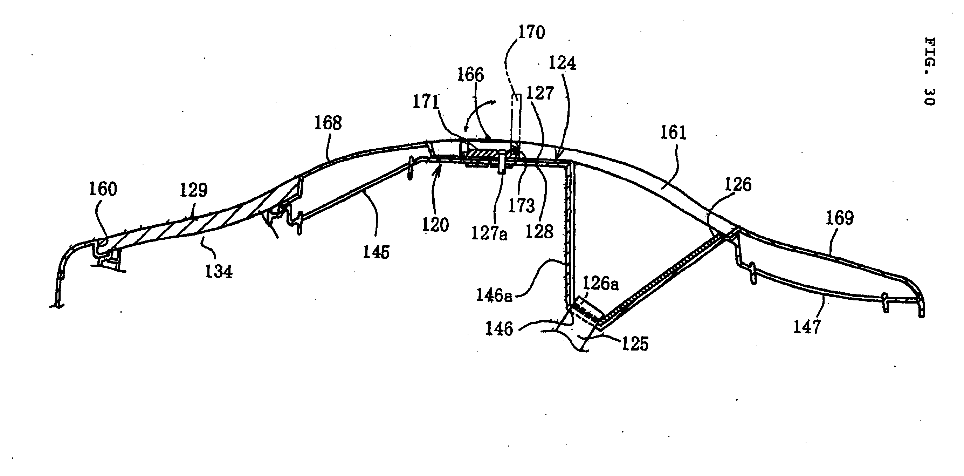

A detailed description is next made of the leg shield 22 and decorative panel 30. Fig. 25 is a rear view of the leg shield 22 to which the decorative panel 30 is attached. Fig. 26 illustrates the leg shield 22 with the decorative panel 30 removed. Fig. 27 is a lateral view of the leg shield 22. Fig. 28 illustrates the decorative panel 30 as viewed from the direction of arrow 28 in Fig. 27. Fig. 29 illustrates the decorative panel 30 as viewed from the direction of arrow 29 in Fig. 28. Fig. 30 is a cross-sectional view taken along line 30-30 of Fig. 25. Symbol C in the figures denotes the centerline of the vehicle body.

The leg shield 22 includes a longitudinal wall portion 120 at its upper portion, a central floor upper portion 121 at its lower portion, and left and right floor front walls 122. The longitudinal wall portion 120 is provided with a joint step portion 123 extending along the entire widthwise direction thereof. The decorative panel 30 is superposed on the joint step portion 123 from outside. The decorative panel 30 also serves as a maintenance cover and is an almost rectangular plate member elongating vehicle-widthwise which has a width substantially equal to the full width of the longitudinal wall portion 120 and covers a portion above the joint step portion 123 of the longitudinal wall portion 120. The front lighting unit 25 is located forward of a portion of the longitudinal wall portion 120 covered by the decorative panel 30.

A key panel 124 is located at a position rightward of the center of the decorative panel 30. The head portion of the key cylinder 125 serving as a main switch is exposed to the key panel 124. The head of the key cylinder 125 is provided with a key insertion slot 125a. The surrounding of the key cylinder 125 is formed as a recess portion 126 which is progressively and forwardly recessed toward the head of the key cylinder 125. The bottom of the recess portion 126 is formed with a head hole 126a adapted to receive the head of the key cylinder 125 fitted thereinto.

The surround of the recess portion 126 is shaped like a large oval surrounding the key cylinder 125. An almost-rectangular projection 127 is provided integrally with the oval to project from a portion thereof toward the central side of the vehicle body. The projection 127 and a seat 171 of a hook 170 are detachably co-fastened to the central portion 128 of the longitudinal wall portion 120 with screws 127a. The hook 170 is formed almost quadrate and divided into upper and lower portions with a slit 172. The upper and lower portions are each attached to the seat 171 via a shaft 173 so as to be able to rise and lie. The upper and lower portions of the hook 170 can be allowed to rise or lie separately or together. When the hook rises, it has an almost right-angle relative to the seat 171 (see Fig. 30), enabling retaining a bag or the like.

A lid 129 is provided at the left end portion of the decorative panel 30 so as to be openable and closable. Among four corners of the decorative panel 30, two upper portions and a left lower portion, i.e., three portions in total, are attached to the longitudinal wall portion 120 with screws 130 and one right lower corner and upper and lower intermediate portions, i.e., three portions in total, are insertably attached to the longitudinally wall portion 120 with insertion projections 131. Thus, the decorative panel 130 can detachably be attached to the longitudinal wall portion 120.

Referring to Fig. 26, the longitudinal wall portion 120 is provided with an opening 134, an almost pentagonally shaped left maintenance hole 145, an almost circular key cylinder hole 146 and an almost tetragonally shaped right maintenance hole 147 in the order from the left to the right in a portion above the joint step portion 123. The left and right maintenance holes 145, 147 are each shaped vertically long. The bulb 51 of the headlight, the bulb 52 of the position light and the bulb 53 of the turn-signal lamp in the left separate lamp body 25B can be maintained, i.e., replaced for the front lighting unit 25 located forward thereof by accessing them therethrough. Each maintenance hole is opened, in up-down-directional width, from a position rearward of and close to the bulb 51 of the headlight to a position rearward of and close to the bulb 53 of the turn-signal lamp (in the figure, since the longitudinal wall portion 120 and the like are inclined, the positions of the bulbs appear to be slightly offset from the position of the opening). Each of the left and right maintenance holes 145, 147 is not opened at a position superposed, right behind, onto the bulbs, that is, at a position slightly offset therefrom in the left-right direction. However, since there is a sufficient distance between the bulbs and the opening, the bulbs can be maintained by flexibly changing the direction of the hand forwardly reaching into the opening. Incidentally, the size and shape of the opening can freely be set in the range where the bulbs can be maintained. A storage portion 133 is formed integrally with the opening 134 provided adjacently to the left maintenance hole 145. Therefore, the rigidity of the longitudinal wall portion 120 can be increased although the relatively large left maintenance hole 145 is provided.

The right maintenance hole 147 can be used to maintain the bulb 51 of the headlight, the bulb 52 of the position light and the bulb 53 of the turn-signal lamp in the right separate lamp body 25A. In addition, the right maintenance hole 147 is adjacent to the key cylinder 125; therefore, it can be use to maintain the key cylinder 125. The central portion 128 of the longitudinal wall portion 120 has a sufficient width between the left and right maintenance holes 147, 145. Thus, also high rigidity can be maintained. In this case, the surround of the key cylinder hole 146 is formed into a recess portion 146a having an almost recessed-curved surface so as to be fitted into the recess portion 126 of the key panel 124. Thus, the size of the opening of the key cylinder hole 146 is requisitely minimized to also prevent the reduced rigidity.

The rear end edge 108 of the meter panel 23 is superposed on the joint edge portion 148 on the upper end of the leg shield. The attachment pieces 109 projecting from the rear end edge 108 are superposed on and screwed to corresponding attachment portions 149 formed along the joint edge portion 148 (Fig. 22). Attachment portions 150 for the decorative panel 30 are formed on the left and right ends of the joint edge portion 148. In addition, another attachment portion 150 is formed at a lower left corner portion near the joint step portion 123.

The leg shield is provided with insertion holes 151 for attachment of the decorative panel 30 at respective positions on the left and right sides of and close to the center of the joint edge portion 148 and a right lower corner portion. The insertion holes 151 are adapted to receive the corresponding insertion projections 131 (Fig. 25) inserted thereinto. The central portion 128 of the longitudinal wall portion is provided with screw holes 152 in an up-down-direction staggered manner. The almost-rectangular projection 127 (Fig. 25) is detachably attached to this portion with screws 127a. Another insertion hole 151 is provided at a lower end portion of the central portion 128 below the screw holes 152 and is adapted to receive the insertion projection 131 inserted thereinto.

The floor upper portion 121 extends rearward so as to cover the upper pipe 18 from above and is bolted to the right lateral surface of the upper pipe 18 with a boss 140 formed on the front right lateral surface thereof. An attachment projection 141 with the protector panel 33 is formed integrally with the lower portion of the floor upper portion 121. In addition, another attachment projection 142 is formed at the rear end portion of the floor upper portion 121 to project rearward and is joined to the front end of the step floor 32 (Fig. 1). Attachment projections 143 project downward from the floor upper portion 121 and are screwed to the corresponding bosses 33a (Figs. 2 and 27) formed inside the protector panel 33.

The floor front wall 122 is joined to the front end portion of the floor panel 31 (Fig. 1) at its lower end and adapted to cover the forward of the leg portion of an occupant. A floor mat 153 is attached to the floor front wall 122. An attachment piece 154 projects from the lower end of the floor front wall 122. This attachment piece 154 is superposed onto and screwed to the front end portion of the floor panel 31.

Referring to Fig. 27, the longitudinal wall portion 120 is rearward inclined at the same degree as that of the inclination of the head pipe. A joint edge portion 132 located at the front edge upper portion of the longitudinal wall portion 120 is superposed onto the internal upper portion of the rear end edge 113 of the front cover 21 and fixedly screwed at an attachment portion 132a to the bosses 114 so as to extend obliquely downwardly from the rearward of the vehicle body (Fig. 23).

The storage portion 133 formed like a square cylinder is provided to project forward at a portion located on the left lateral side of the longitudinal wall portion 120 and provided with the opening 134. An article can be taken out of and put in the storage portion 133 through the opening 134 provided in the longitudinal wall portion 120. A small opening 135 is also provided below the opening 134. An insertion projection 132b is formed to project from the up-down-direction intermediate portion of the front edge of the leg shield and is inserted into and attached to the attachment portion 115 of the front cover 21 (Fig. 23).

Front end lower portions 136 located at the front end portion of the front wall 122 are joined to the lower portion of the rear end edge 113 and screwed to the bosses 114 formed the rear end edge 113 at the attachment portions 136 (Fig. 23). Louvers 137 are provided near the attachment portions 136 to ensure air led to the leg portions of the occupant. Attachment projections 138 relative to the protector panel 33 is projectingly formed at the rear portion of the front wall 122. In addition, a boss 139 is provided at the lower end portion of the front wall 122 and fixedly screwed to the protector panel 33.

The floor upper portion 121 extends rearward to cover the upper pipe 18 from above and is bolted to the right lateral surface of the upper pipe 18 with a boss 140 formed on the front right lateral surface of the floor upper portion 121. An attachment projection 141 associated with the protector panel 33 is integrally formed on the lower portion of the floor upper portion 121. In addition, an attachment projection 142 is formed at the rear end portion of the floor upper portion 121 so as to project rearward and is joined to the front end of the step floor 32. An attachment projection 143 projects downward and is fixedly screwed to the boss 33a (Figs. 1 and 26) formed inside the protector panel 33.

Referring to Fig. 28, the decorative panel 30 is formed with an opening portion 160 at the left lateral end portion in the vehicle-widthwise direction and with a key panel hole 161 at the central portion thereof. The opening 160 is located at a position corresponding to the opening 134 (Fig. 26) of the longitudinal wall portion 120 of the leg shield 22. The lid 129 (Fig. 25) is mounted to the opening 160 so as to freely close and open the opening 134. The profile of the key panel hole 161 conforms to that of the key panel 124 (Fig. 25). The key panel 124 is fitted to the key panel hole 161.

The lip of the key panel hole 161 is tapered to facilitate fitting-positioning the key panel 124. No opening is provided in the right edge portion 169 which is a portion on the right side of the key panel hole 161 of the decorative panel 30. The decorative panel 30 is mounted to cover the right maintenance hole 147 (Fig. 26).

The upper end edge 162 is joined to the rear end edge of the meter panel 23 while the lower end edge 163 is joined to the joint step portion 123 (Fig. 2). Bosses 164 are provided at both left and right ends of the upper end edge 162 and a left corner portion of the lower end edge 163 and superposed on and fixedly screwed to the corresponding attachment portions 150 (Fig. 26) of the longitudinal wall portion 120. Insertion projections 165 are formed at two central positions of the upper end edge 162 and at a right corner and a central portion of the lower end edge 163. The insertion projections 165 are inserted into the corresponding insertion holes 151 of the longitudinal wall portion 120. Thus, the decorative panel 30 is detachably mounted to cover the outside of the longitudinal wall portion 120 (Fig. 26).

Referring to Fig. 29, the decorative panel 30 bends such that its central portion 166 protrudes most rearward and its left and right portion bends and extends forward. Respective lateral end edges 167 at the left and right end portions are superposed on the inside of the rear end edges of the front cover 21. The insertion protrusions 165 project forward.

Referring to Fig. 30, the decorative panel 30 covers the longitudinal wall portion 120 spaced apart therefrom and the key panel hole 161 is open above the central portion 128 and above the recess portion 146a and is adapted to receive the key panel 124 fitted thereinto. The right maintenance hole 147 is sealed by the right side portion 169 of the decorative panel 30. The decorative panel 30 is provided with only one opening 160 on the left side of the central portion 166. The opening 160 communicates with the opening 134 and is opened and closed by the lid 129. A left non-opening portion 168 is formed between the central portion 166 and the opening 160 to cover the left maintenance hole 145.

In this way, the decorative panel 30 is put on the longitudinal wall portion 120 to cover the openings formed in the longitudinal wall portion 120, thereby enhancing external appearance. If the decorative panel 30 is removed, the front lighting unit 25 and the key cylinder 125 can easily be maintained. In addition, the longitudinal wall portion 120 can be maintained in high-rigidity by allowing a plurality of maintenance-targets to share the openings to reduce the number of the openings.

The function of the embodiment is next described. The right and left separate lamp body units 25A, 25B are each composed of the plurality of lamp bodies subjected to integration. Since each separate lamp body unit includes an independent housing 71, however, it corresponds to an individual lamp body of the application concerned. To assemble the right and left separate lamp body units 25A, 25B which are individual lamp bodies, into the front lighting unit 25, the projection pieces 60A, 61A and 62A of the right separate lamp body unit 25A are superposed on the projection pieces 60B, 61B and 62B, respectively, of the left separate lamp body unit 25B. Then, the bolts 63a are each passed through a corresponding one of the attachment holes 60a (Fig. 11) of the projection pieces 60A, 60B and through a corresponding one of the attachment holes of the projection pieces 61A and 61B; and 62A and 62B and are connected with corresponding nuts 63b (Figs. 6, 9 and 11). Thus, the right and left separate lamp body units 25A and 25B are integrally joined together to become a temporarily assembled primary preassembly (see Figs. 6 and 9). In other words, the right and left separate lamp body units 25A and 25B (individual lamp bodies) are integrally joined together to become the front lighting unit 25, which is a lamp body unit of the application concerned.

Subsequently, the primary preassembly is brought into the inside of the upper portion of the front cover 21 and the respective outer lateral edge portions of the right and left separate lamp body units 25A, 25B are joined to the upper edge portions of the front cover 21. The joint projection portions 67 are superposed on and fastened to the attachment portions 59 provided on the inside of the front cover 21 with the bolts 59a and the nuts 59b. Thus, the front cover 21 and the front lighting unit 25 are united into a secondary small assembly (see Fig. 15). In this case, the front lighting unit 25 is the primary preassembly temporarily assembled by integrally joining together the right and left separate lamp body units 25A, 25B. Therefore, handling and positioning are facilitated to enhance workability.

To further attach the secondary preassembly to the body frame side, the pins 68 provided on the respective housings 70 of the right and left separate lamp body units 25A, 25B are each inserted into a corresponding one of the holes 46c of the cushion rubber 46b attached to the oval holes 46a of the bracket 46 included in the front stay 15. Thus, the secondary preassembly is rubber-mounted to the front stay 15 through the elastic members (see Fig. 13).

Subsequently, the nut 45a provided in the stay 45 of the front stay 15 is fitted into the attachment holes 64 of the projection pieces 60A and 60B and then the projection pieces 60A and 60B are co-fastened to the stay 45 with the bolt 64a (Figs. 12 and 14). In this way, the front lighting unit 25 is mounted to the body frame side with the pins 68 of the two positions and the co-fastening portion of the one position using the bolt 64a, i.e., at three positions in total. Further, the upper portion of the front cover 21 is mounted to the body frame through the front lighting unit 25. Also in this case, a secondary preassembly is provided to enhance workability.

As described above, the front lighting unit 25 which is a lamp body unit is fixedly co-fastened to the body frame side stay 45 with the bolt 64a at the joint portion of the right and left separate lamp body units 25A, 25B which are individual lamp bodies. The individual lamp bodies are joined to each other and simultaneously secured to the vehicle body through this joint. The relative positional relationship between the right and left separate lamp body units 25A, 25B which are individual lamp bodies hardly become out of alignment as compared with that of the headlights separately secured to the vehicle body in the past. The positioning can be facilitated without being affected by the front cover 21. Thus, it is possible to position the front lighting unit without the necessities of high molding accuracy and assembling accuracy.

The bolt 64a which is a joint member for the right and left separate lamp body units 25A, 25B which are individual lamp bodies is used to mount the separate lamp body units to the vehicle body frame side. Thus, the accuracy of attaching the lamp body to the body frame can be ensured and the number of parts can be reduced because of co-fastening.

Further, the retaining portions to the body frame with the pair of left and right pins 68 and a central fastening member of the bolt 64a provide three-point attachment shaped in an almost inverted triangle as viewed from the front. The front lighting unit 25 is supported at the apexes of the inverted triangle so that it can be supported firmly.

The lower end edge portion of the front lighting unit 25 is also used as the lower edge portion of the upper portion of the front cover 21 facing the air guide portion 55. Therefore, positioning between the front lighting unit 25 and the front cover 21 is eliminated at the lower edge portion of the upper portion of the front cover 21. Thus, the attachment state is understandable and assembling is facilitated.

The upper portion of the front cover 21 is secured to the body frame via the front lighting unit 25; therefore, the front cover 21 can firmly be supported by the vehicle body while reducing the number of attachment portions. Thus, it is eliminated to attach the upper portion of the front cover 21 to the body frame except the attachment to the front lighting unit 25.

The right and left separate lamp body units 25A, 25B are each provided with the bulb 51 of the headlight, the bulb 52 of the position light, and the bulb 53 of the turn-signal lamp, i.e., with the three bulbs in total. The left maintenance hole 145 and the right maintenance hole 147, i.e., two holes in total, are respectively provided left and right in the longitudinal wall portion 120 of the leg shield at respective positions corresponding to the right and left separate lamp body units 25A and 25B. In addition, the maintenance holes are covered by the decorative cover 30 which is a maintenance cover. Thus, if the decorative cover 30 is removed, the bulbs 51, 52, 53 of the left separate lamp body unit 25B can be maintained by being accessed through the left maintenance hole 145. Similarly, the bulbs 51, 52, 53 of the right separate lamp body unit 25A can be maintained by being accessed through the right maintenance hole 147.

Each of the left maintenance hole 145 and the right maintenance hole 147 is formed longitudinally long and has such a size as to enable the maintenance of the bulbs 51, 52, 53 of the three bulb bodies arranged in the up-down direction. In addition, the left and right maintenance holes 145, 147 are each provided in the longitudinal wall portion 120 of the leg shield which does not have the restraint so much on the size of the opening. Thus, the flexibility of design can be increased while enhancing maintenance performance as compared with the case in the past where the maintenance holes are provided in the front cover which has much restraint on the opening for maintenance. The left maintenance hole 145 and the right maintenance hole 147 are separately provided so as to correspond to the bulbs 51, 51 of the left and right headlights, respectively, instead of a single large opening which extends in the left-and-right direction through the bulbs of two-light type headlights provided left and right separately. Thus, the areas of the openings of the left and right maintenance holes 145, 147 can be reduced so that the side of the leg shield 22 is not forced to have a special reinforcing structure, which increases the flexibility of designing the vehicle.

It is assumed that the front lighting unit 25 is composed of the right and left separate lamp body units 25A, 25B which are separately spaced apart from each other leftward and rightward in the vehicle-width direction and a single maintenance opening is provided to be shared by the right and left separate lamp body units 25A, 25B. In this case, the maintenance opening will be significantly increased in size to decrease the strength of the leg shield 22. However, this embodiment can eliminate such a possibility.

In addition, each of the left and right maintenance holes 145 or 147 prepared for the headlight bulb 51 which is a single lamp body is also used as an opening for maintaining the position light bulb 52 and turn-signal bulb 53 which are other lamp bodies. Thus, the number of openings can be reduced and additionally the flexibility of designing can be increased.

Further, since the right maintenance hole 147 used to maintain the lamp body is disposed near the key cylinder 125, it is used to maintain the key cylinder 125 at the same time. Thus, it is not necessary to provide another maintenance hole exclusively for the key cylinder 125, which further enhances usability of the right maintenance hole 147.

Although the longitudinal wall portion 120 of the leg shield 22 is provided with the opening 134, the provision of the article storage portion 133 in the opening 134 can reinforce the leg shield 22. Thus, the possibility of strength degradation due to the opening 134 can be eliminated. In addition, the left maintenance hole 145 is disposed between the central portion 128 and the storage portion 133, that is, put between the portions each having increased strength; therefore, the longitudinal wall portion 120 can be reinforced.

1: front wheel, 2: rear wheel, 5: power unit, 7: body frame, 21: front cover, 22: leg shield, 23: meter panel, 25: front lighting unit, 25A: right separate lamp body unit, 25B: left separate lamp body unit, 26: windscreen, 27: meter visor, 28a: mirror base cover, 30: decorative panel, 50: trimming plate, 124: key panel, 125: key cylinder, 133: storage portion, 134: opening, 145: left maintenance hole, 146: key cylinder hole, 147: right maintenance hole.

## Claims

1. A vehicle having a support structure for a lamp body unit, which unit is adapted to a front body cover covering at least the front portion of the vehicle and a plurality of individual lamp bodies (25A, 25B) and which is supported by a vehicle body so as to be exposed from the body cover,
wherein the plurality of individual lamp bodies (25A, 25B) includes respective independent housings (71), which are integrally joined together to constitute the lamp body unit (25), and **characterized in that** the lamp body unit (25) is secured to the vehicle body at a joint portion of the housings (71).

2. The vehicle according to claim 1, wherein the plurality of individual lamp bodies (25A, 25B) are joined together with a fastening member with respective end portions of the housings superposed and are secured to the vehicle body with the fastening member.

3. The vehicle according to claim 2, wherein the lamp body unit (25) is composed of a pair of individual lamp bodies (25A, 25B) disposed left and right, the left and right individual lamp bodies (25A, 25B) are provided with respective retaining portions used to mount the left and right individual lamp bodies (25A, 25B) to the vehicle body, and the lamp body unit (25) is secured to a body frame (7) with the fastening member at an almost-center of and below the retaining portions.

4. The vehicle according to any one of claims 1 to 3, wherein the lamp body unit (25) is formed to elongate upward and downward and a lower end edge portion of the lamp body unit (25) is also used as a lower edge portion facing an air guide port (55) which opens in a front surface of the body cover.

5. The vehicle according to any one of claims 1 to 4, wherein the body cover is a front cover (21) which covers the front portion of the vehicle body and the front cover (21) has an upper end which is secured to the lamp body unit (25) and supported by the vehicle body and a lower end which is supported by the body frame (7).

6. The vehicle according to any of the preceding claims, further comprising a maintenance stricture for a lamp body including the front body cover which covers the front of the vehicle, a headlight provided on the front of the vehicle to include a plurality of bulbs (51 to 53), and a seat (20) supported on the vehicle rearward of the headlight, the front body cover including the front cover (21) which covers at least a front surface of the vehicle and a leg shield (22) which covers a rear surface of the front cover (21) and is located forward of the legs of an occupant sitting on the seat (20),
wherein the leg shield (22) is provided with a plurality of openings rearward of the headlight so as to correspond to respective positions of the plurality of bulbs (51 to 53) attached, and
a cover member covering the openings is detachably attached to the leg shield (22).

7. The vehicle according to claim 6, wherein the headlight is headlights separately left and right spaced apart from each other in a vehicle-width direction.

8. The vehicle according to claim 6 or 7, wherein the headlight is a headlight unit in which another lamp body is made integral with the lamp body in an up-down direction and the opening is also used as an opening for maintaining the another lamp body.

9. The vehicle according to any one of claims 6 to 8, wherein a key cylinder (125) is exposed from the leg shield (22) and at least one of the plurality of openings are disposed near the key cylinder (125).

10. The vehicle according to any one of claims 6 to 9, wherein the leg shield (22) is provided with an article storage portion (133) and at least one of the plurality of openings is disposed between the article storage portion (133) and a non-opening portion (168) at the central portion in a vehicle-width direction.

## Patentansprüche

1. Fahrzeug, welches eine Trägerkonstruktion für eine Lampenkörpereinheit aufweist, wobei die Einheit an eine vordere Karosserieabdeckung angepasst ist, welche zumindest den vorderen Abschnitt des Fahrzeugs und eine Vielzahl von einzelnen Lampenkörpern (25A, 25B) abdeckt, und welche durch eine Fahrzeugkarosserie gestützt ist, um so von der Karosserieabdeckung exponiert zu sein,
wobei die Vielzahl von einzelnen Lampenkörpern (25A, 25B) jeweilige unabhängige Gehäuse (71) enthält, welche integral aneinander angefügt sind, um die Lampenkörpereinheit (25) aufzubauen, und **dadurch gekennzeichnet, dass** die Lampenkörpereinheit (25) an der Fahrzeugkarosserie an einem Verbindungsabschnitt der Gehäuse (71) gesichert ist.

2. Fahrzeug gemäß Anspruch 1, wobei die Vielzahl von einzelnen Lampenkörpern (25A, 25B) mit einem Befestigungselement aneinander angefügt sind, wobei jeweilige Endabschnitte der Gehäuse überlagert sind und an der Fahrzeugkarosserie mit dem Befestigungselement gesichert sind.

3. Fahrzeug gemäß Anspruch 2, wobei die Lampenkörpereinheit (25) aus einem Paar von einzelnen Lampenkörpern (25A, 25B) zusammengesetzt ist, welche links und rechts angeordnet sind, wobei die linken und rechten einzelnen Lampenkörper (25A, 25B) mit jeweiligen Rückhalteabschnitten versehen sind, welche verwendet werden, um die linken und rechten einzelnen Lampenkörper (25A, 25B) an der Fahrzeugkarosserie zu montieren, und wobei die Lampenkörpereinheit (25) an einem Karosserierahmen (7) mit dem Befestigungselement an einem Nahezuzentrum von und unterhalb der Rückhalteabschnitte gesichert ist.

4. Fahrzeug gemäß irgendeinem der Ansprüche 1 bis 3, wobei die Lampenkörpereinheit (25) gebildet ist, um sich nach oben und nach unten zu verlängern, und wobei ein unterer Endkantenabschnitt der Lampenkörpereinheit (25) auch als ein unterer Kantenabschnitt verwendet wird, welcher einer Luftführungsöffnung (55) gegenüberliegt, welche sich in eine vorderen Oberfläche der Karosserieabdeckung öffnet.

5. Fahrzeug gemäß irgendeinem der Ansprüche 1 bis 4, wobei die Karosserieabdeckung eine Frontabdeckung (21) ist, welche den vorderen Abschnitt der Fahrzeugkarosserie abdeckt, und die Frontabdeckung (21) ein oberes Ende, welches an der Lampenkörpereinheit (25) gesichert ist und durch die Fahrzeugkarosserie gelagert ist, und ein unteres Ende aufweist, welche durch den Karosserierahmen (7) gelagert ist.

6. Fahrzeug gemäß irgendeinem der vorherigen Ansprüche, weiterhin eine Wartungskonstruktion für einen Lampenkörper umfassend, welche die Frontkarosserieabdeckung enthält, welche die Vorderseite des Fahrzeugs abdeckt, einen Frontscheinwerfer, welcher auf der Vorderseite des Fahrzeugs vorgesehen ist, um eine Vielzahl von Birnen (51 bis 53) zu enthalten, und einen Sitz (20), welcher auf dem Fahrzeug rückwärtig des Frontscheinwerfers gelagert ist, wobei die Frontkarosserieabdeckung eine Frontabdeckung (21) enthält, welche zumindest eine vordere Oberfläche des Fahrzeugs abdeckt, und einen Beinschutz (22), welcher eine hintere Oberfläche der Frontabdeckung (21) abdeckt und vor den Beinen eines Fahrzeuginsassen, welcher auf dem Sitz (20) sitzt, angeordnet ist,
wobei der Beinschutz (22) mit einer Vielzahl von Öffnungen rückwärtig des Frontscheinwerfers versehen ist, um so den jeweiligen Positionen von der Vielzahl von angebrachten Birnen (51 bis 53) zu entsprechen, und
wobei ein Abdeckelement, welches die Öffnungen abdeckt, lösbar an dem Beinschutz (22) angebracht ist.

7. Fahrzeug gemäß Anspruch 6, wobei der Frontscheinwerfer Frontscheinwerfer getrennt links und rechts voneinander beabstandet in einer Fahrzeugbreitenrichtung sind.

8. Fahrzeug gemäß Anspruch 6 oder 7, wobei der Frontscheinwerfer eine Frontscheinwerfereinheit ist, in welcher ein weiterer Lampenkörper integral mit dem Lampenkörper in einer aufwärts-abwärts-Richtung hergestellt ist, und wobei die Öffnung auch als eine Öffnung zum Warten des anderen Lampenkörpers verwendet wird.

9. Fahrzeug gemäß irgendeinem der Ansprüche 6 bis 8, wobei ein Schließzylinder (125) von dem Beinschutz (22) exponiert ist und zumindest eine von der Vielzahl von Öffnungen nahe des Schließzylinders (125) angeordnet ist.

10. Fahrzeug gemäß irgendeinem der Ansprüche 6 bis 9, wobei der Beinschutz (22) mit einem Gegenstandlagerabschnitt (133) versehen ist, und wobei zumindest eine von der Vielzahl von Öffnungen zwischen dem Gegenstandlagerabschnitt (133) und einem nicht-öffnenden Abschnitt (168) an dem zentralen Abschnitt in einer Fahrzeugbreitenrichtung angeordnet ist.

## Revendications

1. Véhicule possédant une structure de support pour une unité de corps de phare, laquelle unité est adaptée à un carénage de carrosserie avant recouvrant au moins la partie avant du véhicule et une pluralité de corps de phare individuels (25A, 25B) et qui est supportée par une carrosserie de véhicule afin d'être exposée à partir du carénage de carrosserie,
dans lequel la pluralité de corps de phare individuels (25A, 25B) comprend des logements indépendants respectifs (71), qui sont joints ensemble de façon intégrée pour constituer l'unité de corps de phare (25), et **caractérisé en ce que** l'unité de corps de phare (25) est fixée à la carrosserie de véhicule à une partie de jonction des logements (71).

2. Véhicule selon la revendication 1, dans lequel la pluralité de corps de phare individuels (25A, 25B) sont joints ensemble avec un élément de fixation avec des parties d'extrémité respectives des logements superposées et sont fixées à la carrosserie de véhicule avec l'élément de fixation.

3. Véhicule selon la revendication 2, dans lequel l'unité de corps de phare (25) se compose d'une paire de corps de phare individuels (25A, 25B) disposés à gauche et à droite, les corps de phare individuels gauche et droit (25A, 25B) sont pourvus de parties de retenue respectives utilisées pour monter les corps de phare individuels gauche et droit (25A, 25B) sur la carrosserie de véhicule, et l'unité de corps de phare (25) est fixée à un châssis de carrosserie (7) avec l'élément de fixation à un quasi-centre des parties de retenue et en dessous de celles-ci.

4. Véhicule selon une quelconque des revendications 1 à 3, dans lequel l'unité de corps de phare (25) est formée pour s'allonger vers le haut et vers le bas et une partie de bord d'extrémité inférieure de l'unité de corps de phare (25) est également utilisée en tant que partie de bord inférieure faisant face à un orifice de guidage d'air (55) qui est ouvert dans une surface avant du carénage de carrosserie.

5. Véhicule selon une quelconque des revendications 1 à 4, dans lequel le carénage de carrosserie est un carénage avant (21) qui recouvre la partie avant de la carrosserie de véhicule et le carénage avant (21) possède une extrémité supérieure qui est fixée à l'unité de corps de phare (25) et supportée par la carrosserie de véhicule et une extrémité inférieure qui est supportée par le châssis de carrosserie (7).

6. Véhicule selon une quelconque des revendications précédentes, comprenant en outre une structure de maintenance pour un corps de phare comprenant le carénage de carrosserie avant qui recouvre la partie avant du véhicule, un phare prévu sur la partie avant du véhicule pour comprendre une pluralité d'ampoules (51 à 53), et un siège (20) supporté sur le véhicule à l'arrière du phare, le carénage de carrosserie avant comprenant le carénage avant (21) qui recouvre au moins une surface avant du véhicule et un protège-jambe (22) qui recouvre une surface arrière du carénage avant (21) et est positionné devant les jambes d'un occupant assis sur le siège (20),
dans lequel le protège-jambe (22) est pourvu d'une pluralité d'ouvertures à l'arrière du phare afin de correspondre à des positions respectives de la pluralité d'ampoules (51 à 53) fixées, et
un élément couvercle recouvrant les ouvertures est fixé de façon détachable au protège-jambe (22).

7. Véhicule selon la revendication 6, dans lequel le phare se compose de phares séparés gauche et droit espacés l'un de l'autre dans un sens de la largeur du véhicule.

8. Véhicule selon la revendication 6 ou 7, dans lequel le phare est une unité de phare dans laquelle un autre corps de phare est réalisé de façon intégrée avec le corps de phare dans un sens vertical et l'ouverture est également utilisée en tant qu'ouverture pour maintenir l'autre corps de phare.

9. Véhicule selon une quelconque des revendications 6 à 8, dans lequel un barillet de serrure (125) est exposé à partir du protège-jambe (22) et au moins une parmi la pluralité d'ouvertures est disposée près du barillet de serrure (125).

10. Véhicule selon une quelconque des revendications 6 à 9, dans lequel le protège-jambe (22) est pourvu d'une partie de stockage d'article (133) et au moins une parmi la pluralité d'ouvertures est disposée entre la partie de stockage d'article (133) et une partie de non-ouverture (168) dans la partie centrale dans un sens de la largeur du véhicule.
